# EUROPEAN PATENT SPECIFICATION

(11) **EP 0 559 224 B1**
(45) Date of publication and mention of the grant of the patent: **30.07.1997**
(21) Application number: 93103600.8
(22) Date of filing: 05.03.1993
(51) Int. Cl.: B62L 3/08, B60T 8/26

(54) **Motorcycle brake apparatus**
Motorrad-Bremsvorrichtung
Dispositif de freinage pour motocyclette

(30) Priority: 06.03.1992 JP 50032/92; 20.05.1992 JP 127288/92; 28.05.1992 JP 137104/92
(43) Date of publication of application: 08.09.1993
(73) Proprietor: HONDA GIKEN KOGYO KABUSHIKI KAISHA, Minato-ku Tokyo (JP)
(72) Inventor: Tsuchida, Tetsuo, c/o K.K. Honda Gijutsu Kenkyusho, Wako-shi, Saitama (JP); Iwashita, Kanau, c/o K.K. Honda Gijutsu Kenkyusho, Wako-shi, Saitama (JP); Nishimoto, Yukimasa, c/o K.K. Honda Gijutsu, Wako-shi, Saitama (JP); Sawano, Yoshiaki, c/o K.K. Honda Gijutsu Kenkyusho, Wako-shi, Saitama (JP)
(74) Representative: Herzog, Markus, Dipl.-Phys. Dr.

(56) References cited:
- EP-A- 0 451 555
- DE-A- 2 837 963
- DE-A- 2 917 526
- US-A- 4 465 322
- US-A- 4 598 954

## Description

The present invention relates to a motorcycle brake apparatus as defined in the preamble part of claim 1

A conventional brake apparatus for motorcycles simultaneously generates a brake force at a front-wheel brake section and a rear-wheel brake section through a hand-operated lever-system brake or a foot-operated pedal-system brake (refer to Japanese Patent Application Laid-open No. S56-154378).

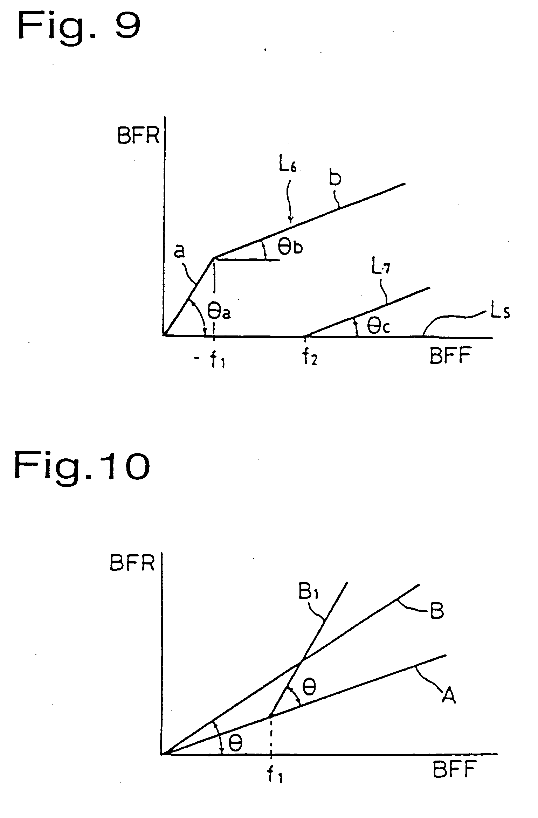

With the conventional constitution, a ratio of the brake force to be distributed to a front wheel and a rear wheel is generally characterized as follows: with the lever-system brake section, a rear-wheel brake force BFR gradually increases as a front-wheel brake force BFF increases as indicated by a line A in Fig. 10 and, with the pedal-system brake section, a curve indicated by a line B is given.

In the case of the brake apparatus mentioned above in which the brake force is simultaneously distributed to the front and rear wheels through the lever and pedal brakes, operating the pedal brake while the lever brake alone is being operated adds a pedal-brake force to a lever-brake force to make a line corresponding to the line B rapidly rise from an operation start point f₁ as indicated by a curve B₁, making it difficult to apply a smooth brake operation. In this case, a rising angle θ is equal to a rising angle θ in a solo operation of the pedal brake.

A motorcycle brake apparatus according to the preamble part of claim 1 is known from EP-A-451 555. A load sensor installed on an upper end of a rear cushion detects a live load, based on which an oil pressure is generated. Based on the oil pressure, a characteristic of a pressure control valve is varied to automatically adjust a brake force distribution characteristic between front and rear wheels to increase or decrease a rear-wheel brake force as the live load increases or decreases according to, for example, the number of persons riding a motorcycle.

With the conventional motorcycle brake apparatus mentioned above, however, the brake force distribution characteristic between the front and rear wheels is determined unilaterally by a live load, disallowing a rider to select a desired brake force distribution characteristic. It is therefore an object of the present invention to provide a motorcycle brake apparatus that allows the rider to select the desired brake force distribution characteristic.

From DE-A-29 17 526 there is known a hydraulic motor cycle brake system in which the brake force distribution ratio between a front wheel brake and a rear wheel brake is adjustable such that with a predetermined increase of the front wheel brake pressure the rear wheel brake pressure is increased in a reduced manner in order to avoid an undesired locking of the rear wheel. It provides no means by which the distribution ratio between the front wheel brake pressure and the rear wheel brake pressure may be adjusted.

From DE-A-28 37 963 there is known a hydraulic motor cycle brake system comprising a braking force regulator. This known system is arranged such that if during an actuation of the rear wheel brake a lever of a hand lever system is activated for additionally braking a front wheel, the braking pressure applied to the rear wheel is reduced in correspondance with the activation of the hand lever system.

US-PS 4,598,954 and US-PS 4,465,322 each disclose a motor cycle having a front wheel brake and a rear wheel brake and a brake force regulator for regulating the braking force ratio between a braking force applied to the front wheel and a braking force applied to the rear wheel such that with an increase in the front wheel braking force the rear wheel braking force is not increased at a corresponding amount. Here, too, no means for influencing the distribution ratio are provided.

It is the object of the present invention to provide a motor cycle brake apparatus allowing the rider to select a desired brake force distribution characteristic. This object is achieved by the motor cycle brake apparatus according to claim 1.

In carrying out the invention, there is provided a motorcycle brake apparatus with a master cylinder connected directly to a brake cylinder of a front wheel and connected through pressure control valves and to a brake cylinder of a rear wheel, comprising manually adjustable adjusting means for varying characteristics of the pressure control valves.

In the subclaims, advantageous embodiments of the present invention are described.

The invention will become apparent from a following description of motorcycle brake apparatusses and of embodiments with reference to accompanying drawings.
Fig. 1 is a schematic diagram of a motorcycle brake apparatus not covered by claim 1;
Fig. 2 is a total block diagram of a motorcycle brake apparatus not covered by claim 1;
Fig. 3 is a sectional view of the mechanical servo;
Fig. 4 is a sectional view of the mechanical servo in operation;
Fig. 5 is a sectional view of the pressure control valve;
Fig. 6 is a diagram describing operations of a motorcycle brake apparatus not covered by claim 1;
Fig. 7 is a total block diagram of a motorcycle brake apparatus not covered by claim 1;
Fig. 8 is a schematic diagram of a motorcycle brake apparatus not covered by claim 1;
Fig. 9 is a diagram describing operations of a motorcycle brake apparatus not covered by claim 1;
Fig. 10 is a diagram describing operations of a conventional brake apparatus;
Fig. 11 is a top view of a motorcycle provided with a brake apparatus practiced as the first embodiment of the present invention;
Fig. 12 is an overall block diagram of the brake apparatus;
Fig. 13 is an enlarged sectional view of portion 3 of Fig. 12;
Fig. 14 is a cross section at line 4-4 of Fig. 13;
Fig. 15 is a graph showing brake characteristics;
Fig. 16 is a diagram equivalent to Fig. 14 in a variation of the first embodiment;
Fig. 17 is an overall block diagram of a brake apparatus practiced as the second embodiment of the present invention;
Fig. 18 is an enlarged diagram of portion 8 of Fig. 17;
Fig. 19 is a cross section at line 9-9 of Fig. 18;
Fig. 20 is a cross section at line 10-10 of Fig. 18;
Fig. 21 is an enlarged diagram of portion 11 of Fig. 17;
Fig. 22 is a graph showing brake characteristics;
Fig. 23 is a plan view of a motorcycle having a brake apparatus not covered by claim 1.
Fig. 24 is an overall block diagram of the brake apparatus;
Fig. 25 is an enlarged view of portion 3 of Fig. 24;
Fig. 26 is an enlarged Sectional view of a main portion of Fig. 25;
Fig. 27 is a cross section at line 5-5 of Fig. 26;
Fig. 28 depicts the function of the embodiment;
Fig. 29 is an enlarged sectional view of portion 7 of Fig. 24 and
Fig. 30 is a graph showing brake characteristics.

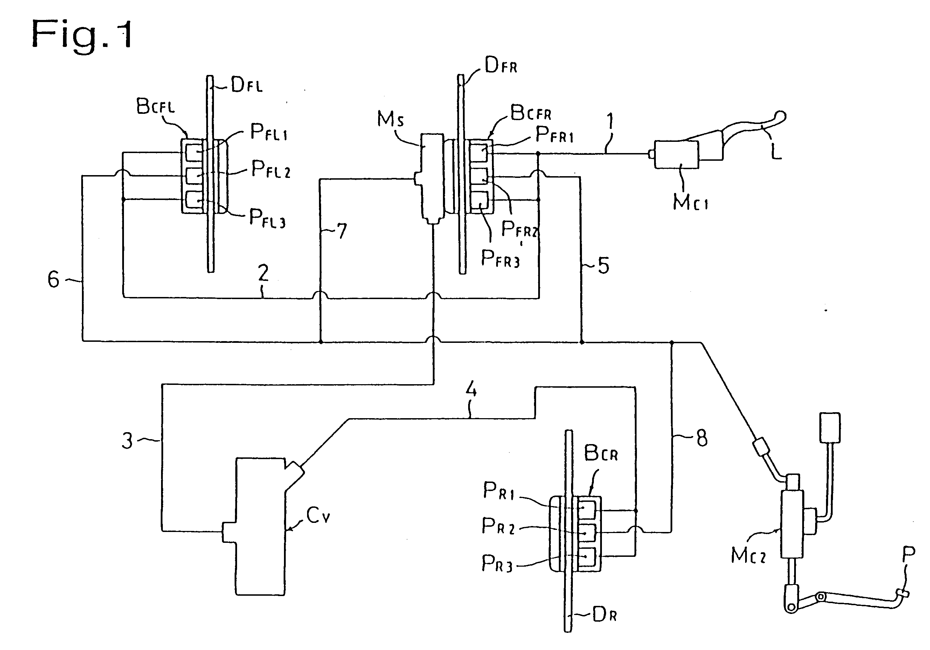

Fig. 1 through Fig. 6 show a first example of a motorcycle brake apparatus not covered by claim 1. Referring now to Fig. 1, D_{FR} and D_{FL} respectively represent a right-side brake disk and a left-side brake disk of a front wheel and D_{R} represents a brake disk of a rear wheel. Brake calipers B_{CFR}, B_{CFL}, and B_{CR} are operatively provided on these brake disks respectively. A master cylinder M_{C1} operated by a hand-operated lever L is in communication through oil paths 1 and 2 with the front-wheel right-side brake caliper B_{CFR} at pots P_{FR1} and P_{FR3} arranged on both sides and with the left-side brake caliper B_{CFL} at pots P_{FL1} and P_{FL3} arranged on both sides.

On the right-side brake caliper B_{CFR}, a mechanical servo MS is installed in communication with it. This mechanical servo is further in communication at its output with a pressure control valve C_{V}, which serves as restraining means, and with the rear-wheel brake caliper B_{CR} at pots P_{R1} and P_{R3} arranged on both sides through an oil path 4. A pedal-system master cylinder M_{C2} operated by a pedal P is in communication through oil paths 5 and 6 with the right-side and left-side brake calipers B_{CFR} and B_{CFL} at pots P_{FR2} and P_{FL2} arranged in the middle respectively. At the same time, the pedal-system master cylinder M_{C2} is in communication through an oil path 7 with the mechanical servo MS at its side hole and through an oil path 8 with the rear-wheel brake caliper B_{CR} at a pot P_{R2} arranged in the middle.

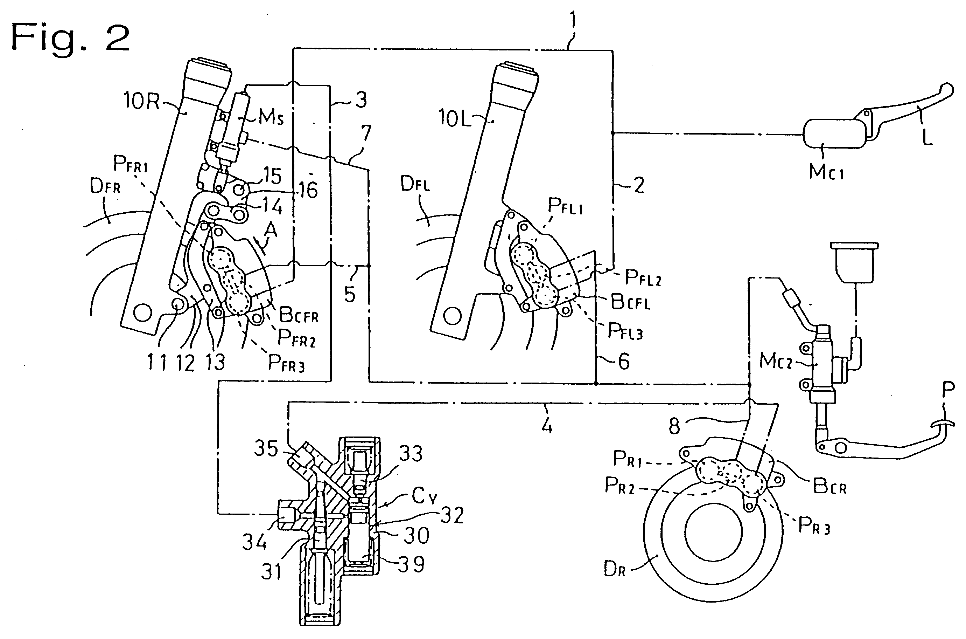

Referring to Fig. 2, the right-side brake caliper B_{CFR} is swingably attached on a front-fork right-side pipe 10R for interlocking with the mechanical servo MS. On a pivot 11 installed on the right-hand pipe 10_{R}, one end of a link 12 is pivotally attached. The right-side brake caliper B_{CFR} is fixedly secured to the link 12 with an attachment part 13. The link 12 is attached at its other end with a L-shaped link 16 pivotally connected with a link 14 and a pivot 15 of the right-side pipe 10_{R}. The mechanical servo MS is connected with the L-shaped link 16 at its top.

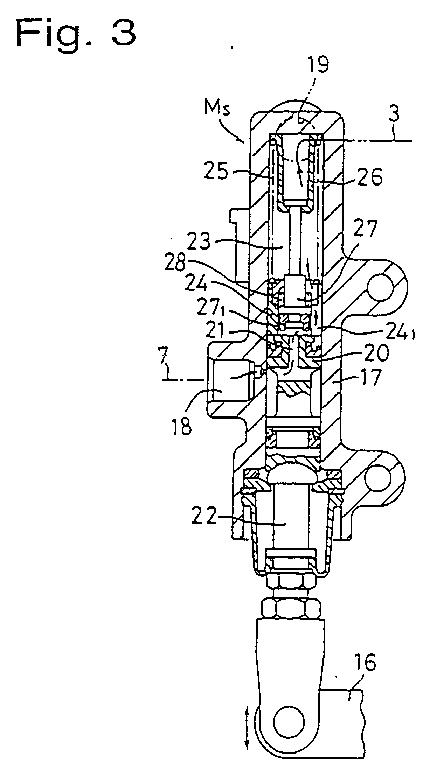

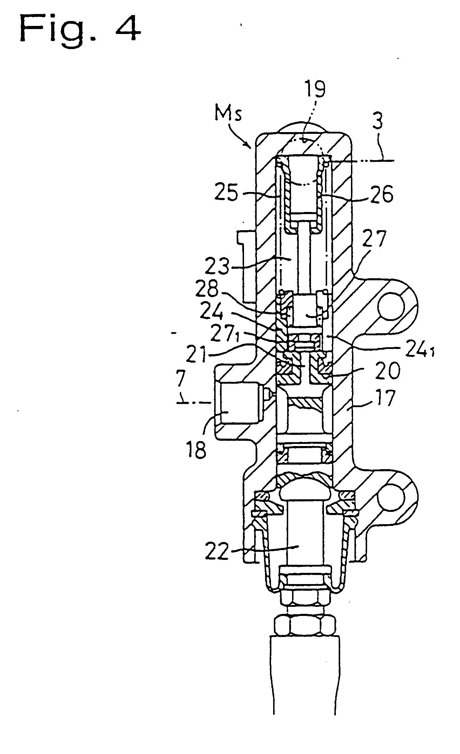

Referring to Figs. 3 and 4, a cylinder 17 of the mechanical servo MS is provided with an entrance 18 to which the oil path 7 is connected and an exit 19 to which the oil path 3 is connected. The cylinder 17 accommodates a piston 20 having a vertical through-hole, the piston being moved upward by a rod 22. In an upper portion of the piston 20, an oil chamber 23 is formed. In this chamber, a cylindrical valve guide 24 having a notch 24₁ is pressed against an upper face of the piston 20 through a spring 25. A valve hanger 26 is inserted between the top of the spring 25 and the ceiling of the oil chamber 23. A valve 27 is locked with a lower end of the valve hanger 26 in a vertically movable manner. At a lower end of the valve 27, an elastic contact portion 27₁ is spaced opposite to the piston 20. The valve 27 is pressed downward with a small spring 28 installed between the valve guide 24 and the valve 27.

Consequently, when the brake caliper B_{CFR} operates to press a disk D_{FR} from both sides as shown in Fig. 2, the brake caliper B_{CFR} is rotationally driven by the disk D_{FR} in the direction of an arrow A together with the link 12 around the pivot 11, pushing up the piston 20 through the links 14 and 16 and the rod 22. The piston 20 goes up to abut on the valve 27 to close a passage 21, pressurizing an oil in the oil chamber 23 into being pushed out of the oil path 3.

When the pressurized oil is supplied from the oil path 7 when the piston 20 has gone down, it goes through the passage 21, which is open, to transmit an oil pressure through the oil chamber 23 to the oil path 3, eventually braking the rear wheel. This brake path acts in a brake operation when the front wheel is not rotating and the caliper B_{CFR} does net shift in the direction of the arrow A as in the case of a slope start.

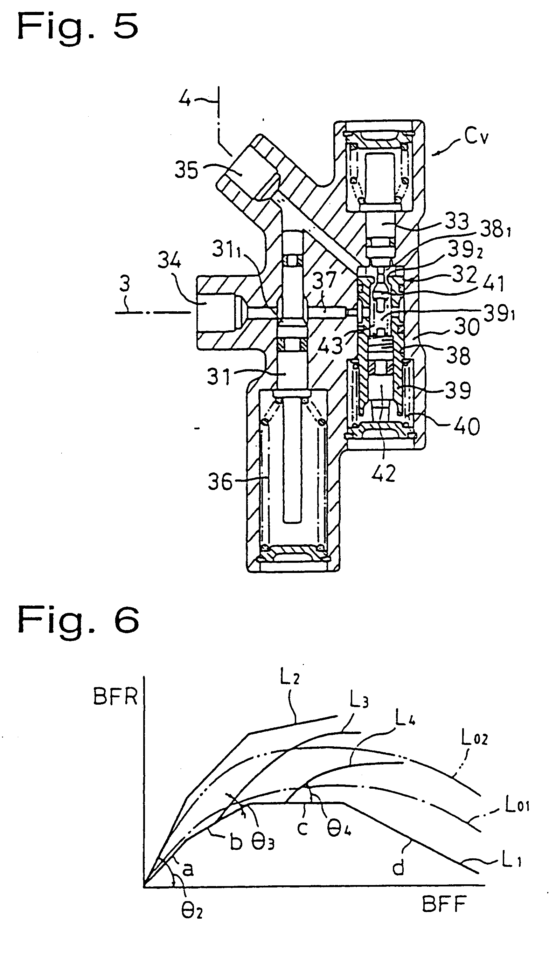

In Fig. 2, a housing 30 of the pressure control valve C_{V} accommodates a pressure reducing piston 31, a proportional valve 32, and a cut piston 33 to control the oil pressure transmitted from an entrance passage 34 to transmit it from an exit passage 35 to the brake caliper B_{CR} of the rear wheel. Referring to Fig. 5, the pressure reducing piston 31 has a shoulder 31₁ to be pressed upward by a spring 36, an upper side of the piston 31 being in communication with the exit passage 35. The proportional valve 32 is installed in a valve chest 38 connecting to the passage 34 and a passage 37. A valve body 39 having a hollow 39₁ connecting to the valve chest 38 and a valve hole 39₂ is pressed upward by a spring 40, above which an upper chamber 38₁ is formed.

A cut valve 41 is inserted in the valve hole 39₂ at its upper portion. A plug 42 is loosely engaged in the hollow 39₁ at its lower portion to be locked at its lower end with the housing 30. The cut valve 41 is pressed upward by a spring 43 installed between the plug 42 and the cut valve 41. The cut valve 41 abuts at its upper end on a lower end of the cut piston 33 to open the valve hole 39₂ when the cut piston is pressed down by a spring 44. When an oil pressure in the upper chamber 38₁ rises, the valve body 39 is pushed down to close the valve hole 39₂; when the pressure lowers, the valve hole 39₂ opens.

The oil pressure introduced from the entrance passage 34 and passage 37 into the valve chest 38 initially acts on the rear wheel brake caliper B_{CR} from the exit passage 35 via the valve hole 39₂ without resistance. Fig. 6 shows brake force distribution characteristics on both wheels. L₀₁ represents an ideal distribution curve with a single rider and L₀₂, an ideal distribution curve with two riders. L₁ represents a characteristic presented when the lever L alone is used and L₂, a characteristic presented when the pedal P alone is used. As indicated by a segment a of the curve L₁, brake forces BFF and BFR of both wheels are in a proportional relationship at the initial stage of lever L operation.

When the oil pressure introduced rises, a down-pressing force acting on the upper side of the valve body 39 increases to lower the valve body 39, causing the cut valve to close the valve hole 39₂. When the inner pressure rises, the valve body 39 goes up to open the valve hole 39₂, raising the pressure in the upper chamber 38₁ to lower the valve body 39. Thus, the valve body 39 repeats up/down motions to raise an exit pressure with a rising ratio being lower than the initial operation of the lever L, presenting a gentle slope as indicated by segment b. When the pressure introduced further rises, the cut piston 33 retreats to enlarge a volume of the upper chamber 38₁, maintaining the rear wheel brake force BFF at an approximately constant level. This results in a curve as indicated by segment c. When the pressure rises still further, the pressure acts conspicuously on the upper side and the shoulder 31₁ of the pressure reducing piston 31 to lower the piston 31, enlarging a volume in communication with the exit 35. As a result, the rear wheel brake force B_{FR} is lowered as indicated by segment d.

Now, when the brake lever L is grasped to press the lever-system master cylinder M_{C1}, the pots P_{FR1}, P_{FR3}, P_{FL1}, and P_{FL3} on the right and left brake calipers B_{CFR} and B_{CFL} are pressurized through the oil paths 1 and 2 to brake the two disks D_{FR} and D_{FL} on the front wheel. The right-side caliper B_{CFR} runs along with the right-side disk D_{R} in the direction of the arrow A to press the rod 22 of the mechanical servo MS, increasing the pressure in the oil chamber 23. This pressurizes the two pots P_{R1} and P_{R3} of the rear wheel brake caliper B_{CR} through the oil path 3 and the pressure control valve C_{V} to brake the rear wheel. A brake force distribution characteristic obtained at this point of time is as indicated by L₁ in Fig. 6. If the pedal P alone is operated, the characteristic as indicated by L₂ is obtained. Here, let a rising tilt angle at this point of time be θ₂.

When the pedal P is pressed to operate the pedal-system master cylinder M_{C2} while a lever brake operation is on, the center pots P_{FR2} and P_{FL2} on the two calipers B_{CFR} and B_{CFL} of the front wheel are pressurized through oil paths 5 and 6. At the same time, the center pot P_{R2} on the caliper B_{CR} of the rear wheel is pressurized. Rotation of the right-side caliper B_{CFR} of the front wheel caused by an increase in the brake force of this caliper increases a pressure generated by the mechanical servo MS. However, since the pressure control valve C_{V} is already in operation, the pressure to be applied to the pots P_{R1} and P_{R3} varies along the lever brake force distribution characteristic L₁ shown in Fig. 6 but does not increase beyond segment c of this characteristic. This directly pressurizes only the pot P_{R2} to increase its pressure. Consequently, an increment of the brake force of the rear-wheel pot P_{R2} causes the brake force distribution characteristic L₁ to shift to L₂ or L₃ in the direction in which the rear wheel brake force increases based on an active force of the pot P_{R2}. At this point of time, if the pot P_{R2} is equal to pot P_{R1} and pot P_{R3} in diameter, the brake force is about 1/3 as high as the rear-wheel brake force generated by a solo pedal operation, so that each of rising tilt angles θ₃, and θ₄ gets smaller than the tilt angle θ₂ obtained by the solo pedal operation. Therefore, setting an increase ratio to a proper level makes it possible to avoid an abrupt change in the brake force. If the lever and pedal brakes are simultaneously operated, no brake force exceeding the pedal brake force distribution characteristic L₂ is generated, thus enhancing operational feeling.

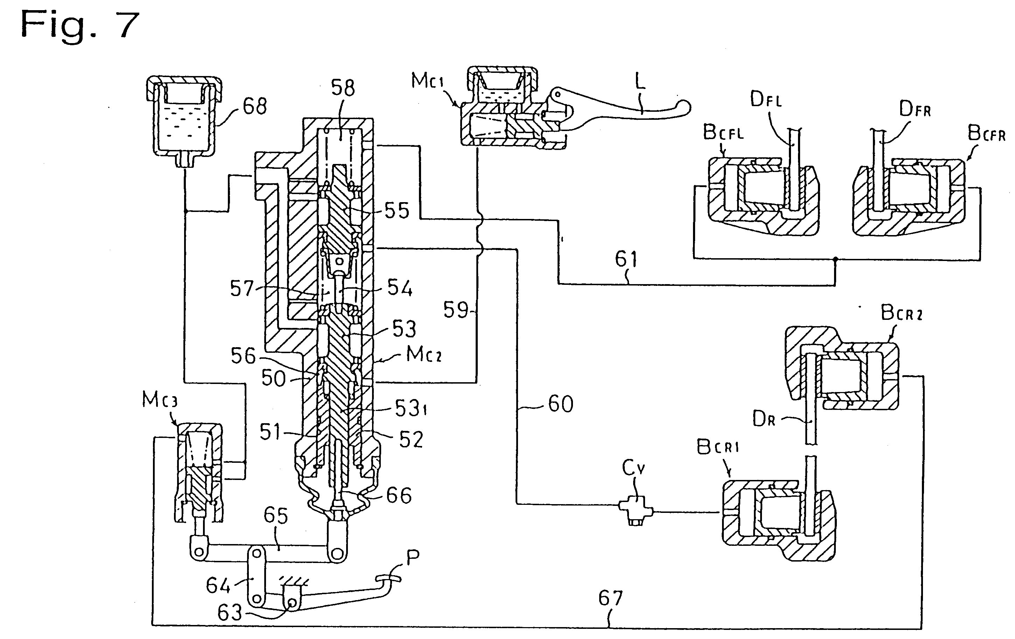

With a second example, not covered by claim 1, shown in Fig. 7, a pedal-system brake is provided with two master cylinders, by one of which a separately installed rear-wheel brake caliper is operated. A second master cylinder M_{C2} for the pedal-system brake is built in a cylinder 50. In an inner chamber 51 of the cylinder 50, a seal pipe 52 is fixedly secured at a lowest level through which a rod 53₁ runs. A first piston 53 is united with this rod, above which a second piston 55 is inserted via a linking part 54 and a spring. Oil chambers 56, 57, and 58 are arranged along this assembly. A first master cylinder M_{C1} for the lever-system brake and the bottom oil chamber 56 are connected with an oil pipe 59, the middle oil chamber 57 is connected through an oil path 60 and a pressure control valve C_{V} with a rear brake caliper B_{CR1}, and the top oil chamber 58 is connected through an oil path 61 with two front-wheel brake calipers B_{CFR} and B_{CFL}.

A pedal P is pivotally secured by a pivot 63 to which a lever 65 is connected through a link 64 in a manner of a balance. The lever 65 is linked at one end with a rod 66 which is connected with the rod 53₁ of the second master cylinder M_{C2}. Another end of the lever 65 is connected with a third master cylinder M_{C3} whose oil path 67 is connected with a separately installed brake caliper B_{CR2}. Reference numeral 68 indicates an oil tank.

When a lever L is operated, an oil pressure is applied to the oil chamber 56 to raise the first piston 53, transmitting an oil pressure generated in the oil chamber 57 through the oil path 60 and the pressure control valve C_{V} to the first rear-wheel brake caliper B_{CR1}. At the same time, the second piston 55 is raised to transmit an oil pressure in the oil chamber 58 to the front-wheel brake calipers B_{CFR} and B_{CFL}.

When the pedal P alone is pressed, the first piston 53 is directly raised, in turn raising the second piston 55 via oil to supply an oil pressure in the same manner as operating the lever L. Further, the third master cylinder M_{C3} operates to operate the second rear-wheel brake cylinder B_{CR2}. Therefore, a brake characteristic indicated by L₂ in Fig. 6 is obtained. When the pedal P is pressed during an operation of the lever L, a brake force of the second rear-wheel brake caliper B_{CR2} is added to L₁ of Fig. 6, so that characteristics indicated by L₃ and L₄ of Fig. 6 are obtained.

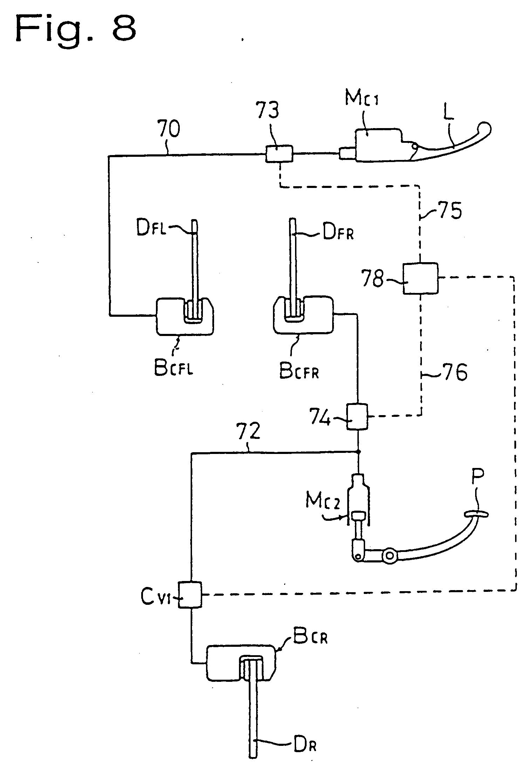

A third example of a brake apparatus not covered by claim 1 will be described as follows by referring to Figs. 8 and 9. A lever-system brake master cylinder M_{C1} is in communication through an oil path 70 with only a front-wheel brake caliper B_{CFL}. A pedal-system brake master cylinder M_{C2} is in communication through an oil path 71 with another front-wheel brake caliper B_{CFR} and through an oil path 72 with a rear-wheel brake caliper B_{CR}. The oil paths 70 and 71 are respectively provided with input detecting sensors 73 and 74. Circuits 75 and 76 for transmitting input signals of the sensors 73 and 74 are connected to a signal circuit 78 which controls a pressure control valve C_{V1}, or restraining means.

First, when the lever-system brake master cylinder M_{C1} alone is operated by pressing a lever L, only the front-wheel brake caliper B_{CFL} is pressurized to generate a front-wheel brake force BFF along a line L₅ which matches a horizontal axis of Fig. 9. When a pedal P alone is pressed, the pedal-system brake master cylinder M_{C2} pressurizes the front end rear brake calipers B_{CFR} and B_{CR} through the oil paths 71 and 72 to produce a characteristic indicated by a line L₆. Initially, a brake indicated by a segment a is performed with a front/rear distribution ratio of angle θₐ. When a front-wheel brake force has reached f₁, it is reduced by the pressure control valve C_{V1}, or the restraining means, to a distribution ratio of angle θ_{b} to perform a brake operation indicated by a segment b. Consequently, operating the pedal P at a point f₂ where the front-wheel BFF is large in a solo use of the lever brake restrains the brake force to θ_{c} having a smaller rising angle than θₐ to obtain a characteristic which follows a line L₇ from a midway along the line L₅. Thus, the brake force for the rear wheel gently increases, thereby making it possible to prevent an abrupt change in the brake force from happening, resulting in a smooth brake operation.

As described and according to the invention, when a pedal-system is operated while a lever-system brake which mainly produces a front-wheel brake force is producing a brake force, a rear-wheel brake force smoothly increases to enhance a brake feeling.

When brake is applied by a pedal of a motorcycle while it is being braked by a hand-operated lever, a brake force is properly distributed to a rear wheel without involving an abrupt change in the brake force.

Front wheel brake calipers B_{CFR} and B_{CFL} are pressurized by a master cylinder M_{C1} of a lever brake system or a master cylinder M_{C2} of a pedal brake system. An oil pressure generated by a mechanical servo operated by a front-wheel brake caliper B_{CFR} is reduced by a pressure control valve C_{V} to be applied to a rear-wheel brake caliper B_{CR} through an oil path 4 and, at the same time, from the pedal system through an oil path 8.

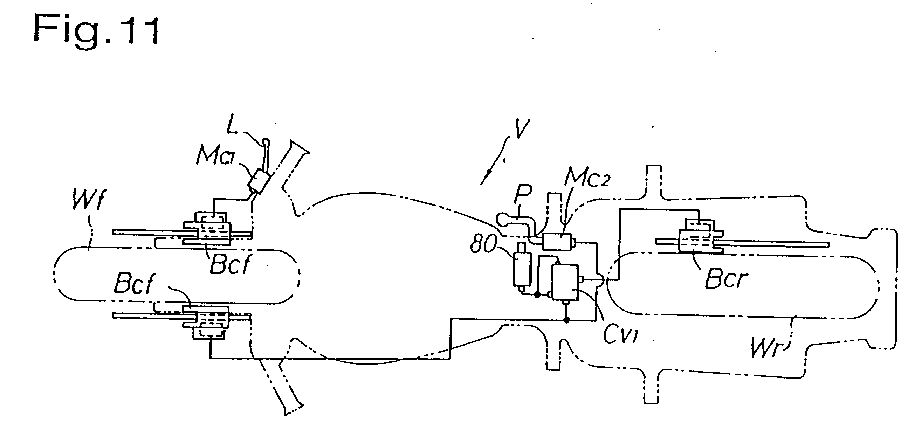

Figs. 11 through 15 show a first embodiment of the present invention.

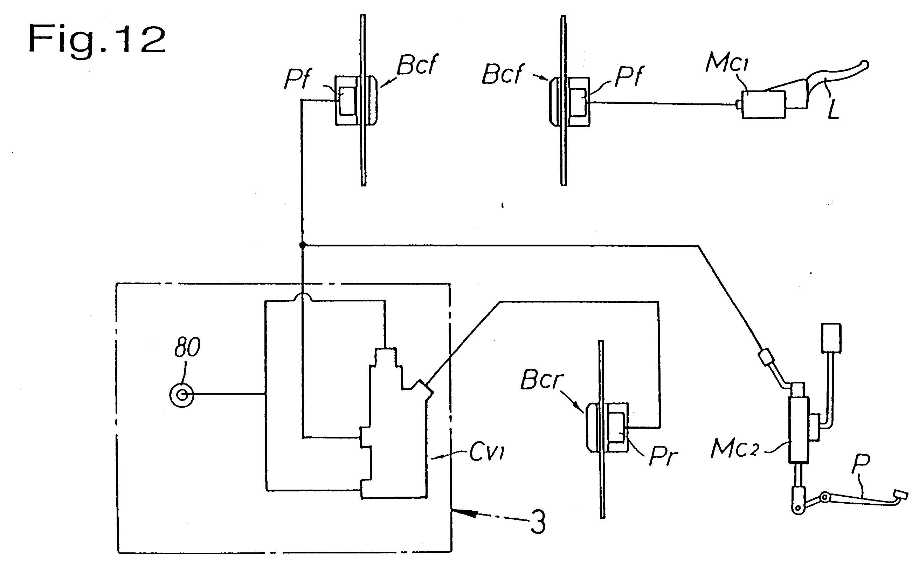

Referring to Figs. 11 and 12, a motorcycle V has a brake lever L installed on a steering handle and a brake pedal P installed on a body frame. A front wheel Wf is provided with a right-side brake cylinder B_{Cf} and a left-side brake cylinder B_{Cf}, each provided with a pot P_{f}. A first master cylinder M_{C1} operated by the brake lever L is directly connected to the pot P_{f} on the right-side brake cylinder B_{Cf}. A second master cylinder M_{C2} operated by the brake pedal P is directly connected to the pot P_{f} of the left-side brake cylinder B_{Cf}.

The second master cylinder M_{C2} is connected through a pressure control valve C_{V1} to one pot Pᵣ on a brake cylinder B_{Cr} of a rear wheel Wr. The pressure control valve C_{V1} is connected to adjusting means 80 for varying a brake force distribution characteristic between the front and rear wheels according to the number of riders.

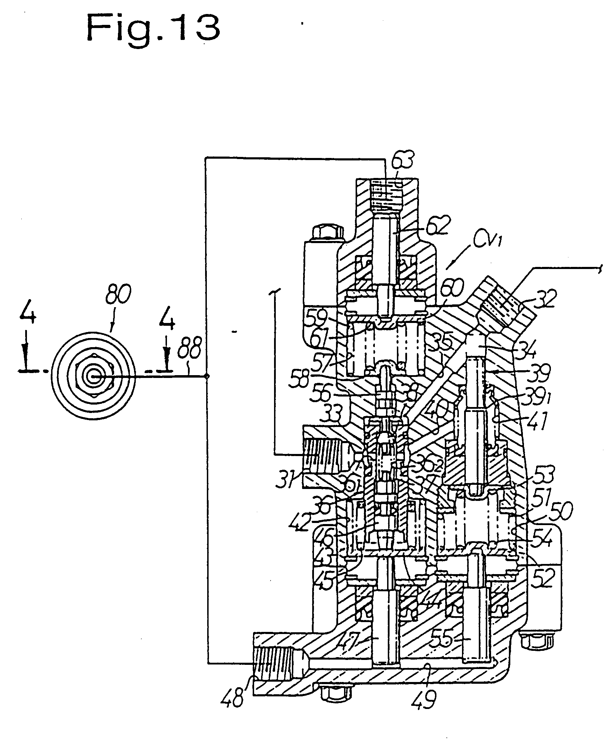

Referring to Fig. 13, a constitution of the pressure control valve C_{V1} will be described in detail as follows.

The pressure control valve C_{V1} is provided with an input port 31 connecting to the second master cylinder M_{C2} and an output port 32 connecting to the pot Pᵣ on the brake cylinder B_{Cr} of the rear wheel Wr. A valve chest 33 in communication with the input port 31 and an oil chamber 34 in communication with the output port 32 are in communication with each other through an oil path 35. In the valve chest 33, a cylindrical proportional valve is arranged in a vertically movable manner. In an inner chamber 36₂ of the proportional valve 36 in communication with the input port 31 through an oil hole 36₁, a cut valve 38 is installed which is pressed by a valve spring 37 in a valve closing direction. When the cut valve 38 is at a valve opening position as shown, the input port 31 is in communication with the output port 32 through the oil hole 36₁, the inner chamber 36₂, a periphery of the cut valve 38, the oil path 35, and the oil chamber 34. The pressure control valve C_{V1} is further provided with a pressure reducing valve 39. A top of the pressure reducing valve 39 meets the oil chamber 34. A shoulder 39₁ formed in the middle of this valve is arranged in a valve chest 41 which is in communication with the valve chest 33 through an oil path 40.

A spring chamber 42 installed under the valve chest 33 is internally provided with a spring seat 44 pressed downward by a return spring 43. Between the spring seat 44 and the proportional valve 36, a valve spring 45 is compressedly installed. An auxiliary valve body 46 is slidably fitted in the inner chamber 36₂ of the proportional valve 36 to abut at its lower end on the spring seat 44 and support at its upper end the valve spring 37 which presses the cut valve 38. A sensing valve 47 is supported in a vertically movable manner at a bottom of the spring chamber 42 to abut at its upper end on an underside of the spring seat 44 and protrude at its lower end into an oil chamber 49 which is in communication through an input port 48 with the adjusting means 80 to be described later. On the other hand, a spring chamber 50 is formed at a bottom of the pressure reducing valve 39. A spring seat 52 pressed downward by a return spring 51 is installed inside the spring chamber 50. A valve spring 54 is compressedly installed between the spring seat 52 and a spring seat 53 which supports the lower end of the pressure reducing valve. A sensing valve 55 supported in a vertically movable manner at the bottom of the above mentioned spring chamber 50 abuts at its top on the underside of the spring seat 52 and protrudes at its lower end into the oil chamber 49. An auxiliary valve body 56 is installed in a vertically movable manner in the valve chest 33 at its upper portion to abut on the top of the cut valve 38, thereby opening this cut valve forcibly. The auxiliary valve body 56 abuts at its upper end on a spring seat 58 installed inside in spring chamber 57. A valve spring 61 is compressedly installed between the spring seat 58 and a spring seat 60 pressed upward by a return spring 59. A sensing valve 62 is supported in a vertically movable manner in the upper portion of the spring chamber 57 to abut at its lower end on the upper side of the spring seat 60 and protrude at its upper end into an input port 63 which is in communication with the adjusting means 80.

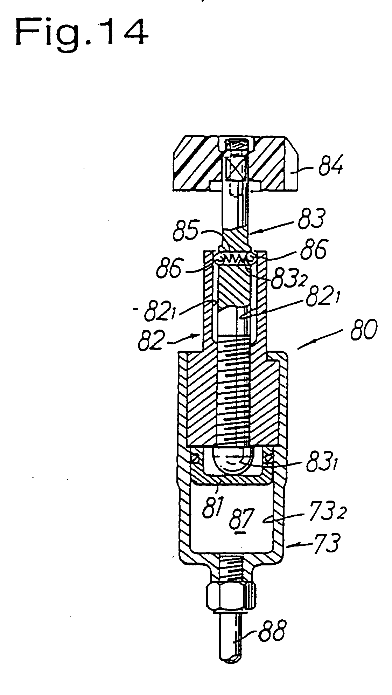

As can be clearly seen from Fig. 14 in addition to Fig. 13, the adjusting means 80 is provided with a cylinder member 73 whose cylinder hole 73₂ is slidably fitted with a piston 81 with its open end blocked with a cap 83 fixedly secured by caulking. An adjusting rod 83 threadedly engaged with the cap 82 at its center has at its top a pressing portion 83₁ abutting on a rear side of the piston 81 and, at its base, an operation member 84. A ball holding hole 83₂ radially passing the adjusting rod 83 contains two balls 86 radially pressed outside by a spring 85. Engaging these two balls 86 with a plurality of grooves 82₁ axially formed in an inner face of the cap 82 allows to stop the adjusting rod 83 appropriately for every predetermined angle.

Thus, turning the operation member 84 to move the adjusting slot 83 toward the cap 82 or away from it moves the piston 81 abutting on the pressing portion 83₁ back and forth to vary a volume of a pressure adjusting chamber 87 formed by the cylinder hole 73₂ and a piston 81.

Next, a function of the first embodiment of this invention having the above-mentioned constitution will be described as follows.

Operating the brake lever L transmits a brake oil pressure generated by the first master cylinder M_{C1} to the pot P_{f} on the right-side brake cylinder B_{Cr} of the front wheel Wf to brake it. Operating the brake pedal P transmits a brake oil pressure generated by the second master cylinder M_{C2} to the pot P_{f} on the left-side brake cylinder B_{Cr} of the front wheel Wf to brake it.

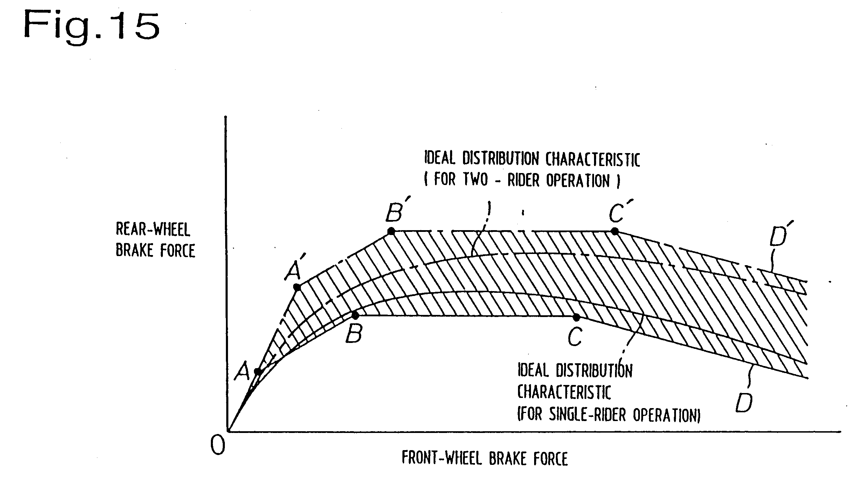

The brake oil pressure generated by the second master cylinder M_{C2} upon operating the brake pedal P is transmitted not only to the pot P_{f} on the left-side brake cylinder B_{Cf} of the front wheel Wf but also to the pot Pᵣ on the brake cylinder B_{Cr} of the rear wheel Wr through the pressure control valve C_{V1}. That is, while the brake oil pressure generated by the second master cylinder M_{C2} is low, the brake oil pressure is transmitted from the input port 31 through the oil hole 36₁ and inner chamber 36₂ of the proportional valve 36, the periphery of the cut valve 38, the oil paths 35 and 34, and the output port 32 to the pot Pᵣ on the brake cylinder B_{Cr} of the rear wheel Wr without change. Consequently, when the brake pedal P is operated with a weak pressing force, the brake forces of the front wheel Wf and the rear wheel Wr will increase according to a strength of the pressing force, presenting a brake force distribution characteristic indicated by a line between point O and point A in Fig. 15.

As the pressing force applied to the pedal P increases, the brake oil pressure to be transmitted to the input port 31 of the pressure control valve C_{V1} further increases; when the brake force of the rear wheel Wr has reached point A in Fig. 15, the proportional valve 36 is lowered by the brake oil pressure acting on its upper face against a setting load applied by the valve spring 45. As a result, the proportional valve touches the cut valve 38 to temporarily block the communication between the input port 31 and the output port 32. When the brake oil pressure to be transmitted to the input port 31 further increases, a pressure inside the inner chamber 36₂ of the proportional valve 36 increases to push up the proportional valve 36, unblocking the communication between the input port 31 and the output port 32. Thus, with the increase of the brake oil pressure, the proportional valve 36 vibrates up and down to intermittently open and close a gap between the proportional valve 36 and the cut valve 38, thereby reducing an increase ratio of the brake oil pressure to be transmitted to the brake cylinder B_{Cr} of the rear wheel Wr. Resulting, an increase ratio of the brake force on the rear wheel Wr will reduce beyond point A in Fig. 15.

When the brake oil pressure to be transmitted to the input port 31 of the pressure control valve C_{V1} further increases to make the braking force on the rear wheel Wr reach point B in Fig. 15, the auxiliary valve body 56 goes up against a setting load of the valve spring 61 to raise the cut valve 38 pressed by the valve spring 37, making the cut valve 38 touch the proportional valve 36. This completely blocks the communication between the input port 31 and the output port 32, so that, if the brake oil pressure to be transmitted to the input port 31 increases thereafter, the brake oil pressure to be transmitted from the output port 32 to the brake cylinder B_{Cr} is maintained at a constant level.

When the brake oil pressure to be transmitted to the input port 31 of the pressure control valve C_{V1} further increases to make the brake force on the rear wheel Wr reach point C in Fig. 15, the brake oil pressure is transmitted through the oil path 40 to the oil chamber 41 to lower the pressure reducing valve 39 against a setting load of the valve spring 54. Consequently, the top of the pressure reducing valve 39 goes down to increase a volume of the oil chamber 34, reducing the brake oil pressure to be transmitted to the brake cylinder B_{Cr}.

Thus, the action of the pressure control valve C_{V1} changes, in four steps, the oil pressure to be transmitted to the brake cylinder B_{Cr} of the rear wheel Wr, or the brake force on the rear wheel Wr. And the distribution characteristic between the brake forces on the front wheel Wf and the rear wheel Wr varies as indicated by a line O-A-B-C-D of Fig. 15, allowing to obtain a distribution characteristic very similar to an ideal distribution characteristic for a single-rider operation.

Now, when the operation member 84 of the adjusting means 80 is operated to move forward the piston 81 along with an adjusting bolt 83 to forcibly reduce the volume of the pressure adjusting chamber 87, a control oil pressure generated in this chamber is transmitted through the input port 48 to the oil chamber 49 of the pressure control valve C_{V1} to push up the two sensing valves 47 and 55. This leads to an increase in the setting loads of the valve spring 45 pressing the proportional valve 36 and the valve spring 54 pressing the pressure reducing valve 39. Likewise, the control oil pressure is transmitted to the input port 63 to push down the sensing valve 62, increasing the setting load of the valve spring 61 pressing the auxiliary valve body 56.

As described above, when the setting loads of the valve springs 42, 53, and 61 respectively pressing the proportional valve 36, the cut valve 38, and the pressure reducing valve 39 are increased, timings at which these three valves 36, 38, and 39, or points A through C in Fig. 15, shift to the right. This changes the characteristic of the brake force distribution between the front wheel Wf and the rear wheel Wr to one represented by a dashed line passing points A' through D'. Consequently, a proper characteristic can be obtained by increasing a ratio of the brake force on the rear wheel Wr such that it adapts to an ideal distribution characteristic for a two-rider operation.

Thus, operating the pressure adjusting means 80 allows to freely adjust the brake force distribution characteristic between the front wheel Wf and the rear wheel Wr in a hatched area which covers the ideal distribution characteristics for single-rider and two-rider operations, thereby providing a brake force distribution characteristic to a rider liking.

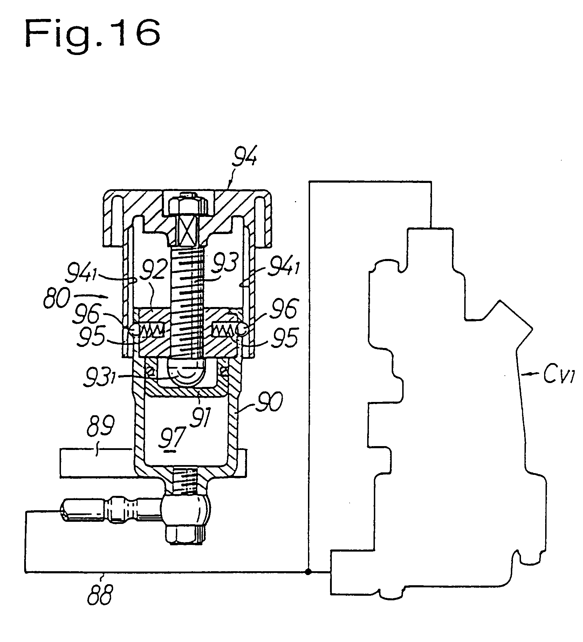

Fig. 16 shows a variation of the first embodiment of the present invention. In this variation, the adjusting means 80 comprises a cylinder 90 supported at a proper position of the body frame through a bracket 89, a piston 91 slidably engaged with the cylinder 90, a cap 92 fixedly secured by caulking on the cylinder 90 at its open end, an adjusting rod 93 threadedly engaged with the cap 92 at its center to abut on a rear side of the piston 90, and an operation member 94 fixedly secured to the adjusting rod 93 at its base to fit the cap 92 around its periphery. The cap 92 is provided with balls 96 that fit in a plurality of ball grooves 94₁ axially formed inside the operation member 94, these balls 96 being radially pressed outside by springs 95.

With this exemplary variation, rotating the operation member 94 to move the piston 91 back and forth by the adjusting rod 93 also allows to vary volumes of a pressure adjusting chamber 97 and a pressure generating chamber 78 to increase or decrease a control oil pressure to be transmitted to the pressure control valve C_{V1}, thereby freely adjusting the brake force distribution characteristic.

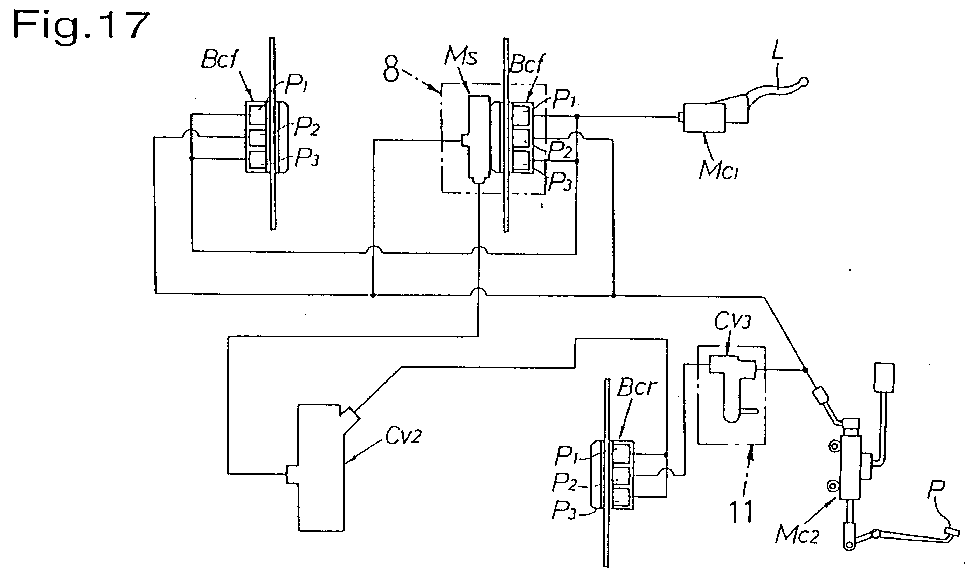

Figs. 17 through 22 show a second embodiment of the present invention.

Referring now to Fig. 17, a first master cylinder M_{C1} to be operated by a brake lever L installed on a steering handle is directly connected to a front pot P₁ and a rear pot P₃ of right- and left-side brake cylinders B_{Cf} and B_{Cf} of a front wheel, each having three pots P₁, P₂, and P₃. On the other hand, a second master cylinder M_{C2} to be operated by a brake pedal P is directly connected to the center pot P₂ on each of the right- and left-side brake cylinders B_{Cf} and B_{Cf} of the front wheel Wf. The right-side brake cylinder B_{Cf} of the front wheel Wf is provided with a mechanical servo MS which generates a brake oil pressure and transmits it through a pressure control valve C_{V2} to a front pot P₁ and a rear pot P₃ on a brake cylinder B_{Cr} of a rear wheel Wr having three pots P₁, P₂, and P₃. The above-mentioned second master cylinder M_{C2} is also connected to the mechanical servo MS and to the center pot P₂ on the brake cylinder B_{Cr} of the rear wheel Wr through a pressure control valve C_{V3}.

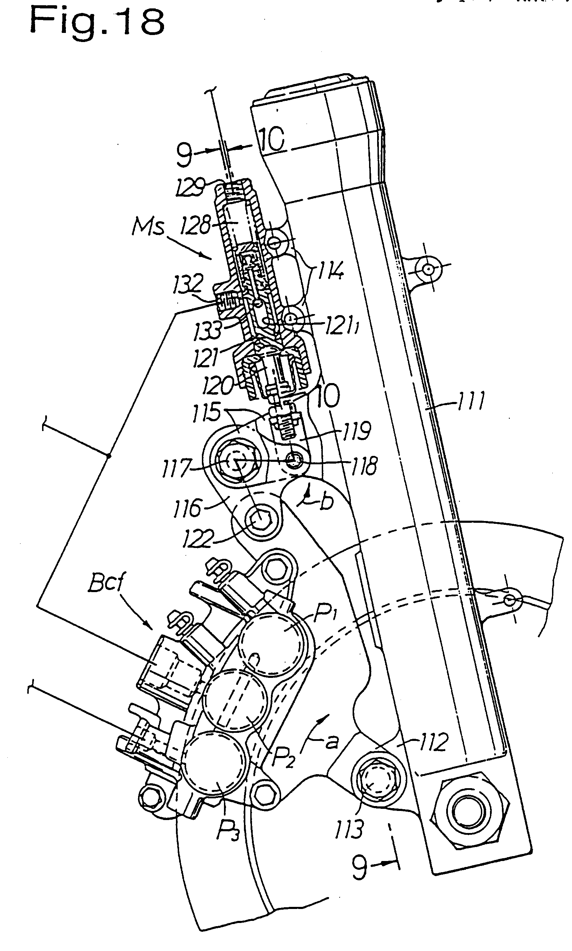

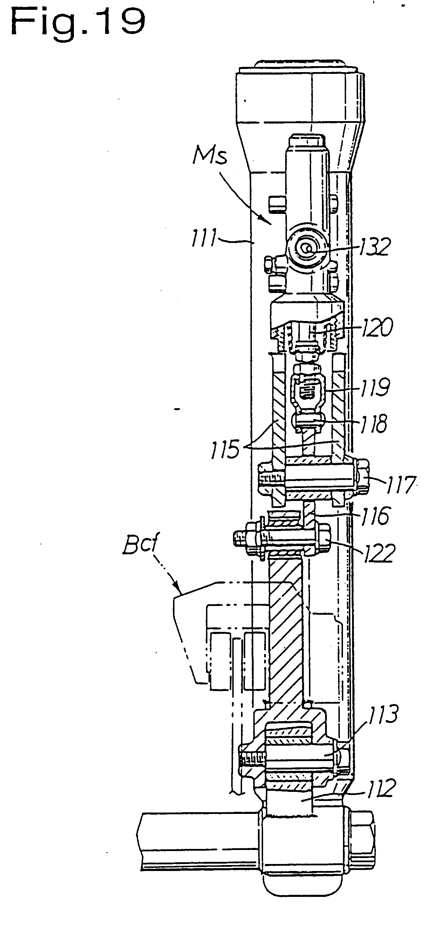

Referring to Figs. 18 and 19, the right-side brake cylinder B_{Cf} of the front wheel Wf is swingably pivoted through a pin 113 to a bracket 112 fixedly secured on a bottom of a front fork 111. The approximately cylindrical mechanical servo Ms is longitudinally supported by the front fork 111 at its upper portion along its rear side through a pair of brackets 114. On a bracket 115 fixedly secured to the front fork 111, an L-shaped link. 116 is swingably pivoted through a pin 117. A rod 120 united with a link member 119 pivotally secured to one end of the link 116 through a pin 118 abuts at its top on a lower end of a piston 121 of the above-mentioned mechanical servo MS. The above-mentioned link 116 is also pivotally secured at another end to the above-mentioned brake cylinder B_{Cr} at its ton through a pin 122. Consequently, when the front wheel Wf is braked to oscillate the brake cylinder B_{Cr} in a direction of an arrow a, the link 116 oscillates in a direction of an arrow b to push up the rod 120, making the mechanical servo MS generate a secondary brake oil pressure.

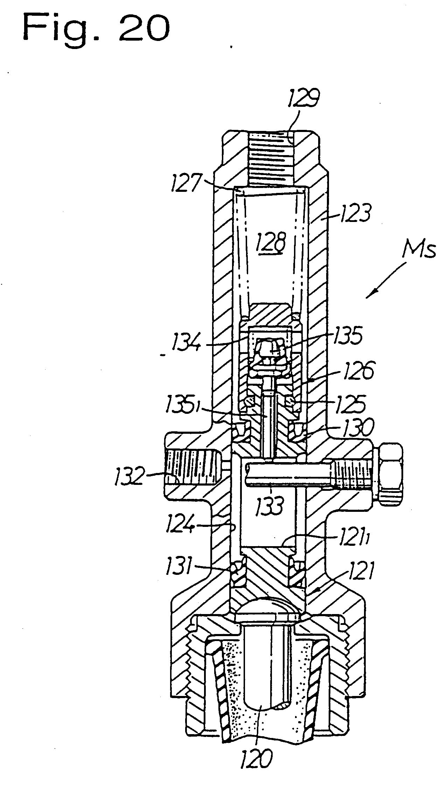

As clearly seen from Fig. 20, a cylinder section 124 is formed in a casing 123 of the mechanical servo MS. The piston 121 slidably fitting inside the cylinder section 124 is connected at its top with a valve guide 126 through an O-ring 125. The cylinder section 124 is formed at its upper portion with an oil chamber 128 to accommodate a return spring 127 for pressing down the above-mentioned valve guide 126 and the piston 121. The oil chamber 128 is formed at its top with an output port 129.

The piston 121 is provided at its front end with a primary cup 130 and at its rear end with a secondary cup 131. The casing 123 is formed between the cups 130 and 131 with a secondary port 132 connecting to the above-mentioned second master cylinder M_{C2}. The piston 121 is formed at its middle with a long groove 121₁ diametrically penetrating it. A stopper bolt 133 threaded in the casing 123 is slidably engaged with the long groove 121₁.

The valve guide 126 is internally and loosely accommodated with a valve 135 pressed by a valve spring 134 in a direction of abutting on the piston 121 at its top to be closed. The valve 135 is integrally formed with a leg 135₁ which centrally penetrates the piston 121 into the long groove 121₁ to abut on the above-mentioned stopper bolt 133. While the piston 121 is pressed by the return spring 127 back to a position shown in Fig. 20, the above-mentioned leg 135₁ of the valve 135 abuts on the stopper bolt to be pushed up, providing communication between the secondary port 132 and the oil chamber 128 through a gap around the valve 135 and the leg 135₁. This allows to transmit the brake oil pressure also to the front pot P₁ and the rear pot P₃ on the brake cylinder B_{Cr} of the rear wheel Wr through the pressure control valve C_{V2} upon Dressing the brake pedal P even when a motorcycle is in a stopped state, thus facilitating a slope start. When the mechanical servo MS operates in this state to slightly push up the piston 121 through the rod 120, the leg 135₁ of the valve 135 detaches from the stopper bolt 133 to make the valve spring 134 press a valve body 135 down, blocking the communication between the secondary port 132 and the oil chamber 128. Consequently, when the piston 121 further goes up, the oil chamber 128 generates a brake oil pressure to be transmitted through the output port 129 to the left-side brake cylinder B_{Cf} of the front wheel Wf and the pressure control valve C_{V2}. Thus, the action of the above-mentioned valve 135 allows to eliminate a primary port heretofore required, avoiding a problem in which the primary cup 130 may otherwise be damaged by the primary port 21 when passing it.

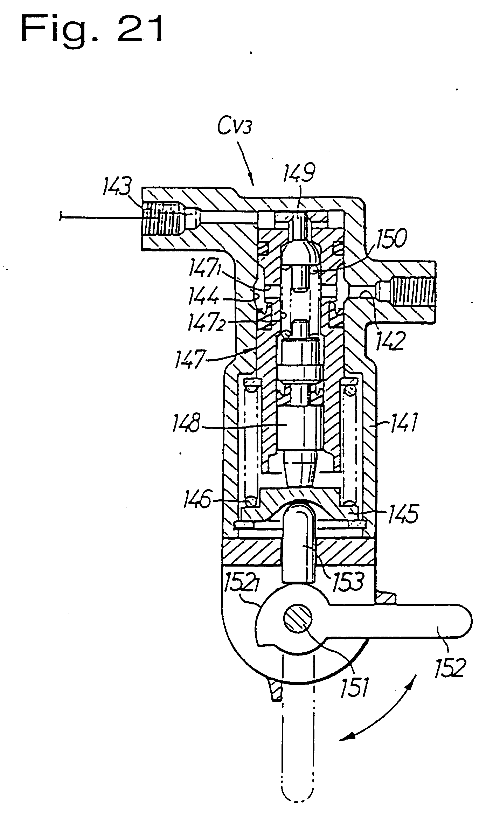

Fig. 21 shows the pressure control valve C_{V3}. The casing 141 of the pressure control valve C_{V3} is provided with an input port 142 through which the brake oil pressure from the second master cylinder M_{C2} is supplied and an output port 143 connecting to the center pot P2 on the brake cylinder B_{Cr} of the rear wheel Wr. Further, a valve chest 144 formed inside the casing 141 is internally formed with a cylindrical proportional valve 147 arranged in a vertically movable manner and pressed upward by a valve spring 146 compressedly installed between a spring seat 145 and the proportional valve 147. An inner chamber 147₂ in communication with the input port 142 through an oil hole 147₁ is internally arranged with an auxiliary valve body 148 abutting at its lower end on the above-mentioned spring seat 145 and a cut valve 149. The cut valve 149 is pressed in a direction of valve closure by a valve spring 150 compressedly installed between the auxiliary valve body 148 and the cut valve 149.

A lever 152 as adjusting means pivotally secured on the casing 141 at its lower end through a pin 151 is provided with a cam face 152₁ abutting on the above-mentioned spring seat 145 through a push rod 153 slidably supported by the casing 141. Consequently, rotating the lever 152 to a position indicated by a dashed line pushes up the push rod 153 at the cam face 152₁, increasing setting loads of the valve spring 146 and valve spring 150; conversely, rotating the lever 152 to a position indicated by a solid line pushes down the push rod 153, decreasing the setting loads of the valve spring 146 and valve spring 150.

Normally, the proportional valve 147 and the cut valve 149 are at valve open position as shown in which the input port 142 is in communication with the output port 143 through the above-mentioned oil hole 147₁, the inner chamber 147₂, and a periphery of the cut valve 149. When the brake oil pressure to be transmitted from the second master cylinder M_{C2} to the input port 142 gradually increases, the brake oil pressure acting on the proportional valve 147 at its upper face presses down the proportional valve 147 against the setting load of the valve spring 146 to make the proportional valve 147 tightly contact the cut valve, temporarily blocking the communication between the input port 142 and the output port 147. However, when the brake oil pressure to be transmitted to input port 142 further increases, a pressure in the inner chamber 147₂ of the proportional valve 147 to push up this valve, restoring the communication between the input port 142 and the output port 143. Thus, as the brake oil pressure increases, the proportional valve 147 vertically oscillates to intermittently open and close a gap between the proportional valve 147 and the cut valve 149. Accordingly, when the brake oil pressure to be transmitted to the brake cylinder B_{Cr} of the rear wheel Wr has reached a predetermined level, an increase ratio of the brake oil pressure lowers at a predetermined ratio.

When the lever 152 is rotated to the position indicated by the dashed line, the setting loads of the valve springs 146 and 150 increase to vary a pressure reducing characteristic of the pressure control valve C_{V3} in a reducing direction; when the lever 152 is rotated to the position indicated by the solid line, the setting loads of the valve springs 146 and 150 decrease to vary the pressure reducing characteristic of the pressure control valve C_{V3} in an increasing direction.

It should be noted that, although the pressure control valve C_{V2} used in this second embodiment is basically the same as the pressure control valve C_{V1} used in the above-mentioned first embodiment in contruction, the pressure control valve C_{V2} in this fifth embodiment is not provided with the adjusting means 80, thereby eliminating the three sensing valves 47, 55, and 62.

A function of the second embodiment of the present invention will be described as follows.

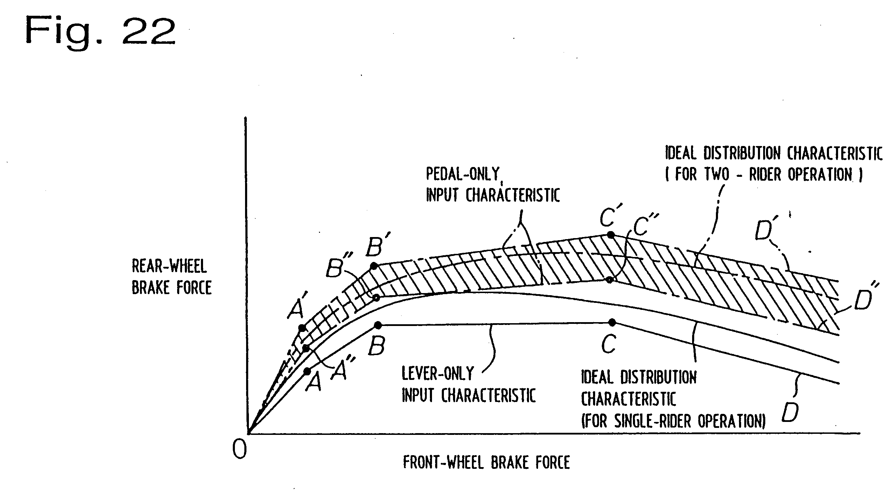

When the brake lever L alone is operated, the brake oil pressure generated by the first master cylinder M_{C1} is transmitted to the front and rear pots P₁ and P₂ on the right-and left-side brake cylinders B_{Cr} and B_{Cr} of the front wheel Wf to brake the front wheel Wf. The secondary brake oil pressure generated by the mechanical servo MS upon braking of the front wheel Wf is transmitted through the pressure control valve C_{V2} to the front and rear pots P₁ and P₃ on the brake cylinder B_{Cr} of the rear wheel Wr to brake the rear wheel Wr. At this point of time, when the secondary brake oil pressure to be transmitted from the mechanical servo Ms to the pressure control valve C_{V2} gradually increases along with an increase in the brake force on the front wheel Wf, the proportional valve 36, the cut valve 38, and the pressure reducing piston 39 arranged in the pressure control valve C_{V2} operate sequentially, providing a brake characteristic indicated by a line O-A-B-C-D shown in Fig. 22. This brake characteristic to be presented when the brake lever L alone has been operated is set under and along an ideal single-rider brake force distribution characteristic curve.

On the other hand, when the brake pedal P alone is operated, the brake oil pressure generated by the second master cylinder M_{C2} is transmitted to the center pot P2 on the right- and left-side brake cylinders B_{Cf} and B_{Cf} of the front wheel Wf to brake the front wheel Wf. The secondary brake oil pressure generated by the mechanical servo MS upon braking of the front wheel Wf is transmitted through the pressure control valve C_{V2} to the front and rear pots P₁ and P₂ on the brake cylinder B_{Cr} of the rear wheel Wr to simultaneously brake the rear wheel Wr. If the brake oil pressure generated by the second master cylinder M_{C2} is greater than that generated by the above-mentioned mechanical servo, the brake oil pressure generated by the second master cylinder M_{C2} is directly transmitted to the pressure control valve C_{V2} to brake the rear wheel Wr. In either case, as the brake oil pressure to be transmitted from the mechanical servo MS to the pressure control valve C_{V2} increases, the proportional valve 36, the cut valve 38, and the pressure reducing piston 39 arranged in the pressure control valve C_{V2} sequentially operate to restrain an increase in the brake force on the rear wheel Wr.

Now, when the brake pedal P is operated, the brake oil pressure generated by the second master cylinder M_{C2} is also transmitted through the pressure control valve C_{V3} to the center pot P₂ on the brake cylinder B_{Cr} of the rear wheel Wr to add a brake force generated by the center pot P₂ to that generated by the above-mentioned front and rear pots P₁ and P₃, resulting in an increase in the brake force on the rear wheel Wr. A magnitude of an additional brake force applied by the brake pedal P to the rear wheel Wr is determined by a magnitude of the brake oil pressure output by the pressure control valve C_{V3}. That is, because the brake oil pressure output by the pressure control valve C_{V3} provides a characteristic which gradually increases with a pressing amount of the brake pedal P, a brake force distribution characteristic curve presented in a solo operation of the brake pedal P as indicated by a line O-A'-B'-C'-D' or O-A''-B''-C''-D'' shown in Fig. 22 comes over the brake force distribution characteristic curve presented in a solo operation of the brake lever L as indicated by the line O-A-B-C-D, with a difference therebetween gradually increasing.

It should be noted that the characteristic O-A'-B'-C'-D' corresponds to a situation in which the lever 152 of the pressure control valve C_{V3} is at the position indicated by the dashed line in Fig. 21 and the pressure reduction characteristic is low, while the characteristic O-A''-B''-C''-D'' corresponds to a situation in which the lever 152 is at the position indicated by the solid line and the pressure reduction characteristic is high. Therefore, swivelling the lever 152 of the pressure control valve C_{V3} between the positions respectively indicated by the dashed line and the solid line in Fig. 21 in the solo operation of the brake pedal P allows to adjust the pressure reduction characteristic of the pressure control valve C_{V3} and freely vary the brake force distribution characteristic between the front and rear wheels inside a hatched area in Fig. 22, providing any distribution characteristic desired by the rider. For example, if, in a solo operation of the brake pedal P in a single-rider operation, the brake force distribution characteristic presents the curve O-A'-B'-C'-D' to greatly depart from the ideal single-rider distribution characteristic curve, swinging the lever 152 to the solid-line indicated position allows to obtain the curve O-A''-B''-C''-D'', coming closer to the ideal distribution characteristic of the single-rider operation.

As described and according to the invention, there is provided a motorcycle brake apparatus having a master cylinder connected with brake cylinders on front and rear wheels with a pressure control valve provided between the master cylinder and the brake cylinder on the rear wheel, comprising adjusting means for adjusting a characteristic of the pressure control valve. The novel constitution allows to easily and freely adjust the characteristic of brake force distribution between front and rear wheels to a rider's liking without having to use any load sensor as practiced on conventional motorcycle brake apparatus.

Adjusting means 80 is connected to a pressure control valve C_{V1} installed between a master cylinder and a rear-wheel brake cylinder. When an operation member 94 of the adjusting means 80 is turned to move a piston 91 back and forth, a volume in a pressure control chamber 97 is increased or decreased to vary a control oil pressure, which in turn varies a setting load of valve spring provided inside the pressure control valve C_{V1} to adjust a pressure reduction characteristic of a brake oil pressure to be transmitted to the brake cylinder on the rear wheel.

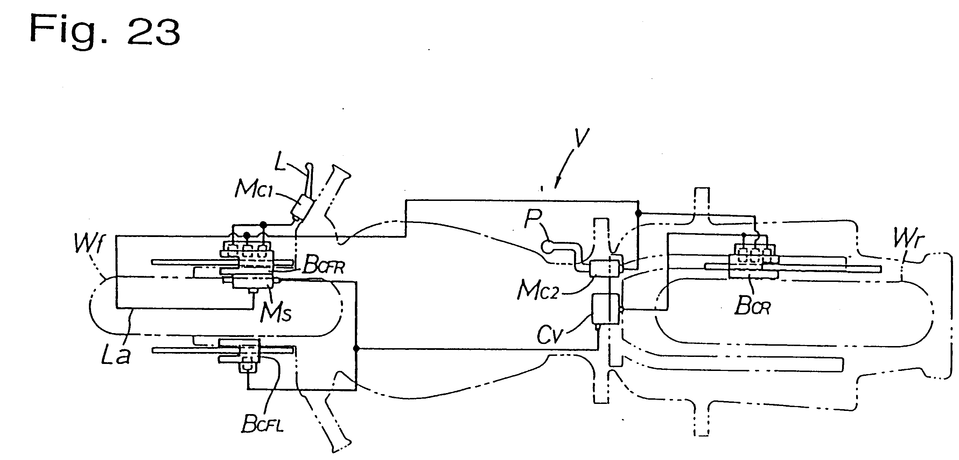

Figs. 23 through 30 show a fourth example of a motorcycle brake apparatus not covered by claim 1.

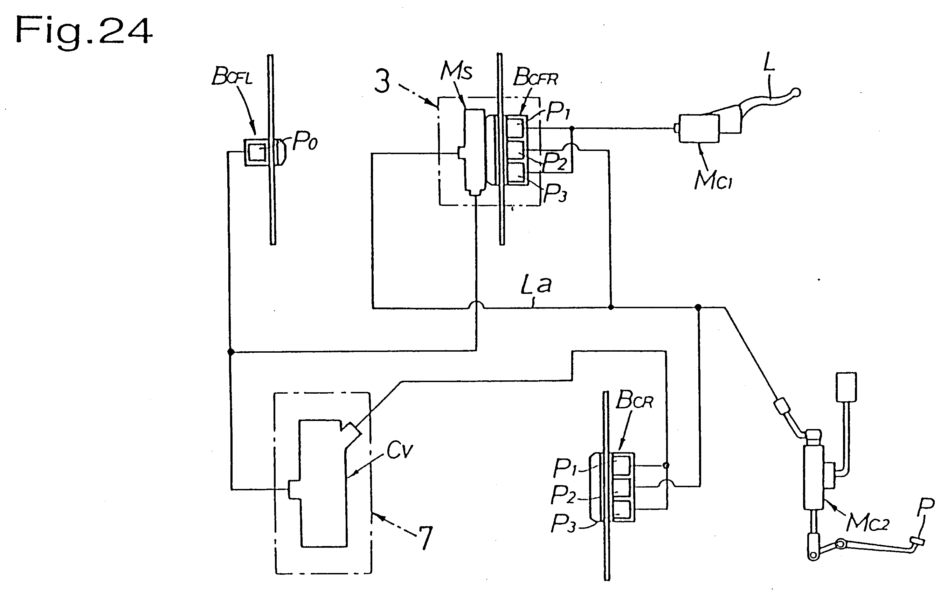

Referring to Figs. 23 and 24, a motor cycle V has a brake lever L installed on a steering handle and a pedal P installed on a body frame. A front wheel Wf has right-side and left-side brake cylinders B_{CFL} and B_{CFR}. The right-side brake cylinder B_{CFR} has three pots, a front pot P₁, a center pot P₂, and a rear pot P₃. The left-side brake cylinder B_{CFL} has one pot, a pot P₀. A brake cylinder B_{CR} installed on a rear wheel Wr has three pots, a font pot P₁, a center pot P₂, and a rear pot P₃.

A first master cylinder M_{C1} operated by the abovementioned brake lever L is directly connected to the front pot P₁ and the rear pot P₃ on the right-side brake cylinder B_{CFR} of the front wheel Wf. The above-mentioned right-side brake cylinder B_{CFR} has a mechanical servo MS which generates a brake oil pressure by using a brake force on the front wheel Wf. The brake oil pressure generated by the mechanical servo MS is transmitted to the pot P₀ on the left-side of the front wheel Wf and to the front pot P₁ and the rear pot P₃ on the brake cylinder B_{Cr} of the rear wheel Wr through a pressure control valve C_{V}.

On the other hand, a second master cylinder M_{C2} operated by the brake pedal P is connected to the center pot P₂ on the right-side brake cylinder of the front wheel Wf and the center pot P₂ of the brake cylinder B_{Cr} of the rear wheel Wr and to the above-mentioned mechanical servo MS through an auxiliary oil path La.

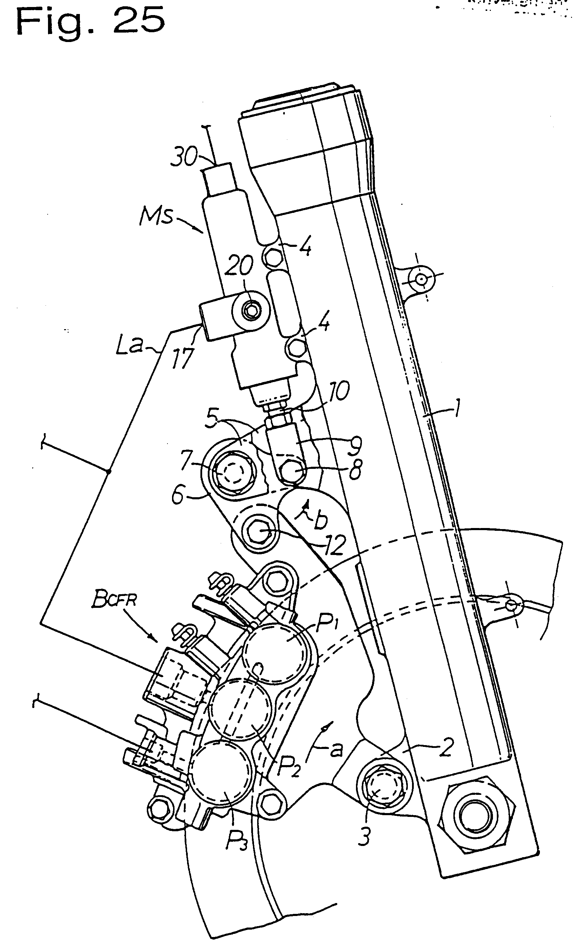

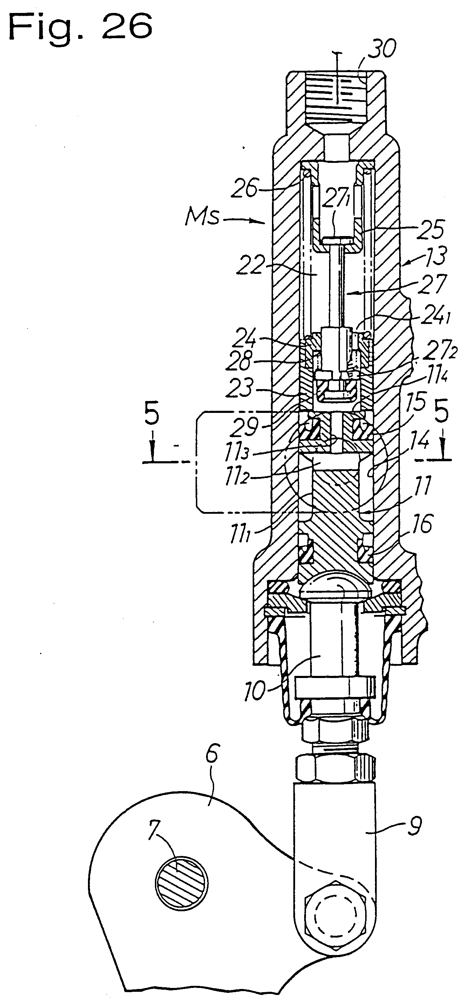

Referring to Fig. 25, the right-side brake cylinder B_{CFR} of the front wheel Wf is swingably pivoted on a bracket 2 fixedly secured on a front fork 1 at its bottom through a pin 3. The approximately cylindrical mechanical servo MS is longitudinally supported by the front fork 1 at its upper portion along its rear side through a pair of brackets 4. On a bracket 5 fixedly secured to the front fork 1, an L-shaped link 6 is swingably pivoted through a pin 7. A rod 10 united with a link member 9 pivotally secured to one end of the link 6 through a pin 8 abuts at its top on a lower end of a piston 11 [refer to Fig. 26) of the above-mentioned mechanical servo MS The above-mentioned link 6 is also pivotally secured at another end to the above-mentioned brake cylinder B_{CFR} at its top through a pin 12. Consequently, when the front wheel Wf is braked to oscillate the brake cylinder B_{Cf} in a direction of an arrow a, the link 6 oscillates in a direction of an arrow b to push up the rod 10, making the mechanical servo MS generate a secondary brake oil pressure.

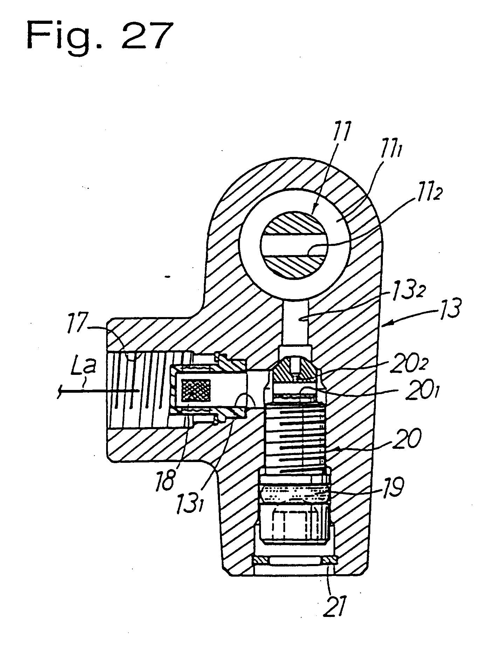

As seen from Figs. 26 and 27, a casing 13 of the mechanical servo MS is internally formed with a cylinder 14. The piston 11 slidably fitted in the cylinder 14 is provided at its upper and lower ends with a primary cup 15 and a secondary cup 16 respectively. Between the primary cup 15 and the secondary cup 16, a circular oil groove 11₁ formed around the piston 11 opens into a valve seat 11₄ formed on the piston 11 at its upper side through oil paths 11₂, and 11₃.

The casing 13 is formed at its side with an input port 17 connecting to the above-mentioned second master cylinder M_{C2}. The input port 17 is in communication with the oil groove 11₁ of the piston 11 through a mesh filter 18 and oil paths 13₁ and 13₂. The casing 13 is threaded with an orifice bolt 20 having an O-ring 19 around it in a direction of crossing the above-mentioned input port 17, the orifice bolt 20 being prevented by a snap ring 21 from escaping. The orifice bolt 20 is formed at its top with an oil path 20₁ diametrically penetrating, at a center of which an orifice 20₂ in communication with the above-mentioned oil path 13₂ is formed. Therefore, the input port 17 is in communication with the oil groove 11₁ of the piston 11 through the mesh filter 18, the oil path 13₁ of the casing 13, the oil path 20₁ of the orifice bolt 20, the orifice 20₂ of the orifice bolt 20, and the oil path 13₂ of the casing 13, from which the input port 17 is further in communication with the valve seat 11₄ through the oil paths 11₂ and 11₃ of the piston 11. When the orifice bolt 20 is loosened back to a position shown in Fig. 6, the orifice bolt 20 is formed at its top with a gap δ, providing communication between the input port 17 and the oil groove 11₁ of the piston 11 through the gap δ without passing the orifice 20₂.

In an oil chamber 22 formed on a cylinder 14 at its top, a first valve guide 23 and a second valve guide 24, each formed circularly, are slidably supported one mated with another. A return spring 26 compressedly installed between the second valve guide 24 and a third valve guide provided on an upper end of the cylinder 14 presses the first valve guide 23 to abut at its lower end on a top face of the piston 11. On the above-mentioned first, second, and third valve guides 23, 24, and 25, a valve 27 is slidably supported. The valve 27 is pressed by a valve spring 28 compressedly installed between the second valve guide 24 and a valve body 29 in a downward direction, or in a direction in which the valve body 29 installed at a bottom of the valve 27 sits on the valve seat 11₄ of the piston 11.

In a state when the mechanical servo Ms is not operating as shown in Fig. 26, a flange 27₁ formed on the valve 27 on its upper end is locked to the third valve guide 25 to make the valve body 29 of the valve 27 depart from the valve seat 11₄. At this point of time, the oil path 11₃ of the piston 11 opened by the valve 11₄ gets communicated with the oil chamber 22 through a plurality of notches 27₂ formed around the valve 27 and a plurality of notches 24₁ formed on the second valve guide 24. The oil chamber 22 in turn gets communicated with the left-side brake cylinder B_{CFL} of the front wheel and the pressure control valve C_{V} through an output port 30.

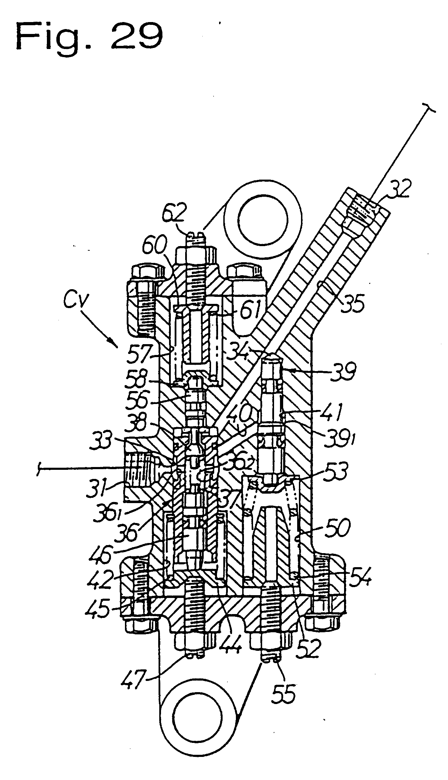

Next, a constitution of the above-mentioned pressure control valve C_{V} will be described in detail by referring to Fig. 29. The pressure control valve C_{V} is provided with an input port 31 connected to the output port 30 of the mechanical servo MS and an output port 32 connected to pots P₁ and P₃ on the brake cylinder B_{Cr} of the rear wheel Wr. A valve chest 33 in communication with the input port 31 and an oil chamber 34 in communication with the output port 32 are in communication with each other through an oil path 35. The valve chest 33 is internally arranged with a cylindrical proportional valve in a vertically movable manner. An inner chamber 36₂ of the proportional valve 36 in communication with the above-mentioned input port 31 through an oil hole 36₁ is internally arranged with a cut valve 38 pressed by a valve spring 37 in a valve closing direction. When the cut valve 38 is at a valve opening position shown, the input port 31 gets communicated with the output port 32 through the above-mentioned oil hole 36₁, the inner chamber 36₂, a periphery of the cut valve 38, the oil path 35, and the oil chamber 34. The pressure control valve CV is further provided with a pressure reducing piston 39 whose top meets the above-mentioned oil chamber 34 and whose shoulder 39₁ formed in its middle is arranged in a valve chest 41 which is in communication with the above-mentioned valve chest 33 through an oil path 40.

A spring chamber 42 installed under the above-mentioned valve chest 33 is internally provided with a spring seat 44 locked with a stopper bolt 47. Between the spring seat 44 and the proportional valve 36, a valve spring 45 is compressedly installed. An auxiliary valve body 46 is slidably fitted in the inner chamber 36₂ of the proportional valve 36 to abut at its lower end on the spring seat 44 and support at its upper end the valve spring 37 which presses the above-mentioned cut valve 38.

On the other hand, a spring chamber 50 in communication with the pressure reducing piston 39 at its lower side is internally provided with a spring seat 52 locked with a stopper bolt 55. Between the spring seat 52 and a spring seat 53 supporting the above-mentioned pressure reducing piston 39 at its lower end, a valve spring 54 is compressedly installed. The valve chamber is arranged at its upper portion with an auxiliary valve body 56 in a vertically movable manner, which abuts on the above-mentioned cut valve 38 at its upper end to forcibly open it. The auxiliary valve body 56 abuts at its upper end on a spring seat 58 arranged inside a spring chamber 57. Between the spring seat 58 and a spring seat 60 locked with a stopper bolt 62, a valve spring 61 is compressedly installed.

A function of this embodiment having an above-mentioned setup will be described as follows.

When the brake lever L is operated, a brake oil pressure is generated by the first master cylinder M_{C1} and is transmitted to the two pots P₁ and P₃ on the right-side brake cylinder B_{CFR} of the front wheel Wf to brake it. At this moment, as seen from Figs. 25 and 26, the brake cylinder B_{CFR} swings around the pin 3 in the direction of the arrow a to push up the rod 10 of the mechanical servo MS via the link 6, causing the piston 11 to advance through the cylinder 14 against the force of the return spring 26. This immediately causes the valve seat 11₄ formed on the top face of the piston 11 to sit on the valve body 29 installed on the valve 27 at its lower end, blocking communication between the input port 17 and the oil chamber 22. When the piston 11 further advances, a secondary brake oil pressure in proportion to its stroke is generated in the oil chamber 22 and is transmitted from the output 30 to the pot P₀ on the left-side brake cylinder B_{CFL} of the front wheel and to the two pots P₁ and P₃ on the brake cylinder B_{CR} of the rear wheel Wr through the pressure control valve C_{V}.

When the brake pedal P is operated, a brake oil pressure is generated by the second master cylinder M_{C2} and transmitted to the center pot P₂ on the right-side brake cylinder B_{CR} of the rear wheel Wr and to the input port 17 of the mechanical servo MS As mentioned above, the mechanical servo MS operates by an operation of the right-side brake cylinder B_{CFR} of the front wheel Wf to generate a secondary brake oil pressure, which is transmitted from the output port 30 to the left-side brake cylinder B_{CFL} of the front wheel and the pressure control valve C_{V}.

The brake oil pressure transmitted to the input port 17 of the mechanical servo MS is then transmitted to the valve seat 11₄ of the piston 11 through the mesh filter 18, the oil path 13₁ of the casing 13, the oil path 20 of the orifice bolt 20, the orifice 20₂ of the orifice bolt 20, the oil path 13₂ of the casing 13, the oil groove 11₁ of the piston 11, and the oil path 11₂ of the piston 11. At this moment, if the brake oil pressure transmitted from the input port 17 to the valve seat 11₄ of the piston 11 is greater than that generated in the oil chamber 22 by the action of the mechanical servo MS the valve body 29 departs from the valve seat 11₄ against the force of the valve spring 28, causing the brake oil pressure transmitted from the input port 17 to the valve seat 11₄ of the piston 11 to be transmitted to the output port 30 through the notch 27₂ of the valve 27, the notch 24₁ of the second valve guide 24, and the oil chamber 22. From the output port 30, this brake oil pressure is transmitted to the left-side brake cylinder B_{CFL} of the front wheel and the pressure control valve C_{V}. That is, if the second master cylinder M_{C2} operates, either the secondary brake oil pressure generated by the mechanical servo MS or the brake oil pressure transmitted from the second master cylinder M_{C2} to the input port 17 of the mechanical servo MS, whichever is greater, is selected to be transmitted to the output port 30.

It should be noted that, if the brake oil pressure generated by the mechanical servo MS and the brake oil pressure transmitted from the second master cylinder M_{C2} to the input port 17 compete each other, an intermittent open/close operation of the above-mentioned valve 27 may cause a vibration in an auxiliary oil path L₁ connecting the second master cylinder M_{C2} with the input port 17 of the mechanical servo MS. However, according to the present invention, the vibration generated in the auxiliary oil path L₁ by the intermittent open/close operation of the valve 27 can be dampened to avoid reduction in brake feeling.

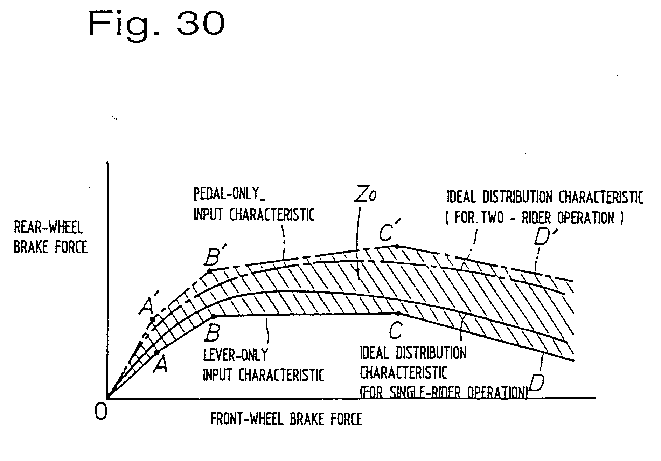

When the brake oil pressure generated by the mechanical servo MS upon operation of the brake lever L is applied to the input port 31 of the pressure control valve C_{V}, it is then transmitted to the brake cylinder B_{CR} of the rear wheel Wr through the oil hole 36₁ of the proportional valve 36, the periphery of the cut valve 38, the oil path 35, the oil path 34, and the output 32. At this moment, the brake forces on the front wheel Wf and the rear wheel Wr increase in proportion to an amount of operation of the brake lever L, resulting in a brake force distribution characteristic indicated by a line connecting points O and A in Fig. 30.

When the brake oil pressure transmitted to the input port 31 of the pressure control valve C_{V} gradually increases to cause the brake force of the rear wheel Wr to reach point A in Fig. 30, the proportional valve 36 is lowered by the brake oil pressure acting on its upper side against a setting load of the valve spring 45. As a result, the proportional valve 36 comes in contact with the cut valve 38 to temporarily blocking communication between the input port 31 and the output port 32. When the brake oil pressure to the input port 31 increases further, a pressure inside the inner chamber 36₂ of the proportional valve 36 increases to push up the proportional valve 36 again, restoring the communication between the input port 31 and the output port 32. Thus, as the brake oil pressure increases, the proportional valve 36 vertically vibrates to intermittently open/close a gap between the proportional valve and the cut valve 38, reducing an increase ratio of the brake oil pressure to be transmitted to the brake cylinder B_{CR}. Consequently, the increase ratio of the brake force on the rear wheel Wr starts reducing beyond point A of Fig. 30.

When the brake oil pressure to the input port 31 of the pressure control valve C_{V} further increases to cause the brake force on the rear wheel Wr to reach point B of Fig. 30, an auxiliary valve body 56 goes up against a setting load of the valve spring 61 to push up the cut valve 38 pressed by the valve spring 37 onto the proportional valve 36. This completely blocks the communication between the input port 31 and the output port 32, so that, even if the brake oil pressure transmitted thereafter to the input port 31 increases, the brake oil pressure from the output port 32 to the brake cylinder B_{CR} is kept at a constant level.

When the brake oil pressure to the input port 31 of the pressure control valve C_{V} further increases to cause the brake force on the rear wheel Wr to reach point C in Fig. 30, the brake oil pressure is transmitted to the oil chamber 41 through the oil path 40 to lower the pressure reducing piston 39 against a setting load of the valve spring 54. This increases the volume of the oil chamber 34 to reduce the brake oil pressure to be transmitted to the brake cylinder B_{CR}.

Thus, the action of the pressure control valve C_{V} changes, in four steps, the oil pressure to be transmitted to the brake cylinder B_{CR} of the rear wheel Wr, or the brake force on the rear wheel Wr. And the distribution characteristic between the brake forces on the front wheel Wf and the rear wheel Wr varies as indicated by a line O-A-B-C-D of Fig. 30, allowing to obtain a distribution characteristic very similar to an ideal distribution characteristic for a single-rider operation.

When the brake pedal P is operated, the brake oil pressure generated by the mechanical servo MS or the brake oil pressure transmitted through the mechanical servo MS is applied to the input port 31 of the pressure control valve C_{V} to control the brake oil pressure to be transmitted to the brake cylinder C_{BR} of the rear wheel Wr in steps as described above. At the same time, the brake oil pressure generated by the second master cylinder M_{C2} is directly transmitted to the center pot P₂ on the brake cylinder B_{CR} of the rear wheel Wr to brake the rear wheel Wr. As a result, in terms of the brake force distribution characteristic provided by an operation of the brake pedal P, the brake force on the rear wheel Wr gets greater than that on the front wheel by an amount added by the center pot P₂ of the brake cylinder B_{CR} as compared with the above-mentioned operation of the brake lever L. This allows to obtain a characteristic very near an ideal distribution characteristic for a two-rider operation as indicated by a line O-A'-B'-C'-D' in Fig. 30.

Consequently, simultaneously or separately operating the brake lever L and the brake pedal P allows to accordingly obtain any brake force distribution characteristic inside a hatched area Z₀ defined by the line O-A-B-C-D and the line O-A'-B'-C'-D' in Fig. 30.

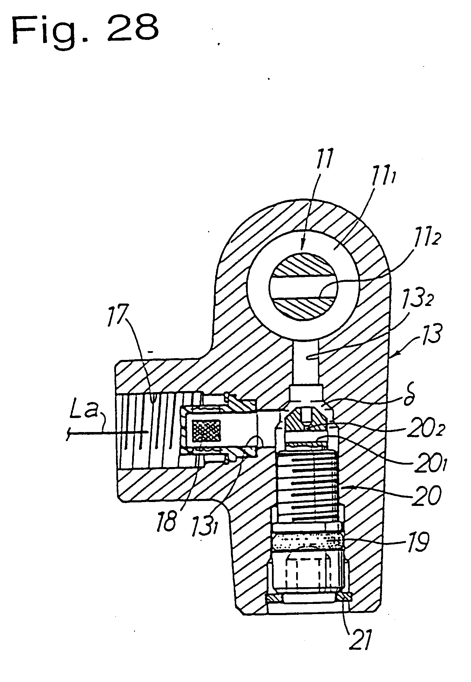

It should be noted that, when a brake oil is poured in the brake apparatus of the finished motor cycle V at the factory, the orifice bolt 20 of the mechanical servo MS is loosened as shown in Fig. 28 to form the gap δ around the orifice bolt. This allows to pour the brake oil without having to pass it through the orifice 20₂, thereby shortening brake oil pouring time.

As described and according to the invention, there is provided a motorcycle brake apparatus for preventing a reduction in brake feeling by using an orifice formed by narrowing down an auxiliary oil path even if a valve provided in the auxiliary oil path between a first master cylinder and a second master cylinder intermittently vibrates when a brake oil pressure generated by the first master cylinder and a brake oil pressure generated by the second master cylinder compete each other.

A motorcycle brake apparatus preventing a valve opening/closing an auxiliary oil path between a primary master cylinder and a secondary master cylinder from resonating in the auxiliary oil path when brake oil pressures generated by these cylinders compete each other.

An input port 17 provided on a casing 13 of the secondary master cylinder operated by a brake reaction of a primary brake cylinder is connected to the primary master cylinder through an auxiliary oil path La. An orifice bolt 20 is threaded between the input port 17 and the casing 13 containing the above mentioned valve. The orifice bolt 20 is internally formed with an orifice 20₂ by narrowing down flow path cross area to prevent the auxiliary oil path La from resonating.

## Claims

1. A motorcycle brake apparatus having hand-operated lever-system input means (L, M_{C1}) and foot-operated pedal-system input means (P, M_{C2}) for braking a front wheel (Wf) and a rear wheel (Wr) by at least one of said input means, comprising restraining means (C_{V}) for restraining an increment of a brake force applied to said rear wheel (Wr) against an increment of a brake force applied to said front wheel (Wf) when a pedal (P) of said foot-operated pedal-system input means (P, M_{C2}) is operated during an operation of a lever (L) of said hand-operated lever-system input means (L, M_{C1}), further comprising an adjustment means (80; C_{V3}) for adjusting an operational characteristic of said restraining means (C_{V}) in order to adjust the ratio of said increment of said brake force applied to said rear wheel (Wr) to the increment of said brake force applied to said front wheel (Wf),
**characterized in**
that said adjustment means (80; C_{V3}) comprises manually adjustable adjustment means (80; C_{V3}).

2. The motorcycle brake apparatus according to claim 1, wherein said manually adjustable adjustment means (80; C_{V3}) is operable for continuously varying the ratio between a maximum ratio and a minimum ratio.

3. Brake apparatus as claimed in claim 1 or 2, wherein said hand-operated lever system input means (L, M_{C1}) is operable for braking said front wheel (Wf) whereas said foot-operated pedal system input means (P, M_{C2}; M_{C3}) is operable for simultaneous braking said front wheel (Wf) and said rear wheel (Wr).

4. Brake apparatus as claimed in one of claims 1 to 3 2, wherein said hand-operated lever system input means (L, M_{C1}) is operable for effecting a greater break force of the front wheel (Wf) than the brake force of the rear wheel (Wr).

5. Brake apparatus as claimed in one of claims 1 to 4, wherein said foot-operated pedal system input means (P, M_{C2}; M_{C3}) is operable for unrestrained braking said front wheel (Wf), but for braking said rear wheel (Wr) with a break force restrained against the brake force of said front wheel (Wf).

6. Brake apparatus as claimed in one of the preceeding claims, wherein said restraining means is in fluid-connection between said foot-operated pedal system input means (P, M_{C2}) and a rear wheel brake (B_{CR}).

7. A motor-cycle brake apparatus according to one of claims 1 to 6, wherein said restraining means ore rear-wheel brake force applying means that operate only when said pedal (P) is operated and do not operate when said lever (L) is operated.

8. A motor-cycle brake apparatus according to any of claims 1 to 7, with a master cylinder (M_{C2}) connected directly to a brake cylinder (B_{Cf}) of said front wheel (Wf) and connected through a pressure control valve (C_{V3}) to a brake cylinder (B_{Cr}) of said rear wheel (Wr), said adjustment means being operable for varying characteristics of said pressure control valve (C_{V3}).

## Patentansprüche

1. Kraftradbremsvorrichtung mit handbetätigten Hebelsystemeingabemitteln (L, M_{C1}) und fußbetätigten Pedalsystemeingabemitteln (P, M_{C2}) zum Bremsen eines Vorderrads (Wf) und eines Hinterrads (Wr) durch mindestens eines der Eingabemittel, umfassend Beschränkungsmittel (C_{V}) zum Beschränken einer Zunahme einer auf das Hinterrad (Wr) ausgeübten Bremskraft gegenüber einer Zunahme einer auf das Vorderrad (Wf) ausgeübten Bremskraft, wenn ein Pedal (P) der fußbetätigten Pedalsystemeingabemittel (P, M_{C2}) während einer Betätigung eines Hebels (L) der handbetätigten Hebelsystemeingabemittel (L, M_{C1}) betätigt wird, ferner umfassend ein Einstellmittel (80; C_{V3}) zum Einstellen einer Betriebscharakteristik der Beschränkungsmittel (C_{V}), um das Verhältnis der Zunahme der auf das Hinterrad (Wr) ausgeübten Bremskraft zur Zunahme der auf das Vorderrad (Wf) ausgeübten Bremskraft einzustellen,
**dadurch gekennzeichnet**, daß das Einstellmittel (80; C_{V3}) ein manuell einstellbares Einstellmittel (80; C_{V3}) umfaßt.

2. Kraftradbremsvorrichtung nach Anspruch 1, bei der das manuell einstellbare Einstellmittel (80; C_{V3}) zum kontinuierlichen Verändern des Verhältnisses zwischen einem maximalen Verhältnis und einem minimalen Verhältnis betreibbar ist.

3. Bremsvorrichtung nach Anspruch 1 oder 2, bei der das handbetätigte Hebelsystemeingabemittel (L, M_{C1}) zum Bremsen des Vorderrads (Wf) betreibbar ist, wogegen das fußbetätigte Pedalsystemeingabemittel (P, M_{C2}; M_{C3}) zum gleichzeitigen Bremsen des Vorderrads (Wf) und des Hinterrads (Wr) betreibbar ist.

4. Bremsvorrichtung nach einem der Ansprüche 1 bis 3, bei der das handbetätigte Hebelsystemeingabemittel (L, M_{C1}) zum Bewirken einer größeren Bremskraft des Vorderrads (Wf) als der Bremskraft des Hinterrads (Wr) betreibbar ist.

5. Bremsvorrichtung nach einem der Ansprüche 1 bis 4, bei der das fußbetätigte Pedalsystemeingabemittel (P, M_{C2}; M_{C3}) zum unbeschränkten Bremsen des Vorderrads (Wf), jedoch zum Bremsen des Hinterrads (Wr) mit einer gegenüber der Bremskraft des Vorderrads (Wf) beschränkten Bremskraft betreibbar ist.

6. Bremsvorrichtung nach einem der vorhergehenden Ansprüche, bei der das Beschränkungsmittel in Fluidverbindung zwischen dem fußbetätigten Pedalsystemeingabemittel (P, M_{C2}) und einer Hinterradbremse (B_{CR}) steht.

7. Kraftradbremsvorrichtung nach einem der Ansprüche 1 bis 6, bei der die Beschränkungsmittel Hinterradbremskraftaufbringungsmittel sind, welche nur dann wirksam sind, wenn das Pedal (P) betätigt wird, und nicht wirksam sind, wenn der Hebel (L) betätigt wird.

8. Kraftradbremsvorrichtung nach einem der Ansprüche 1 bis 7 mit einem Hauptzylinder (M_{C2}), welcher unmittelbar mit einem Bremszylinder (B_{Cf}) des Vorderrads (Wf) verbunden ist und über ein Drucksteuerventil (C_{V3}) mit einem Bremszylinder (B_{Cr}) des Hinterrads (Wr) verbunden ist, wobei das Einstellmittel zum Verändern von Charakteristiken des Bremssteuerventils (C_{V3}) betreibbar ist.

## Revendications

1. Dispositif de freinage pour motocyclette comprenant des moyens d'entrée de système de levier actionné à la main (L, M_{C1}) et des moyens d'entrée de système de pédale actionné au pied (P, M_{C2}) pour freiner une roue avant (Wf) et une roue arrière (Wr) par au moins l'un desdits moyens d'entrée, comprenant des moyens modérateurs (C_{V}) pour modérer une augmentation d'une force de freinage appliquée à ladite roue arrière (Wr) par rapport à une augmentation d'une force de freinage appliqué à ladite roue avant (Wf) quand une pédale (P) desdits moyens d'entrée du système de pédale actionné au pied (P, M_{C2}) est actionnée au cours de l'actionnement d'un levier (L) desdits moyens d'entrée du système de levier actionné à la main (L, M_{C2}), comprenant en outre des moyens de réglage (80 ; C_{V3}) pour régler une caractéristique de fonctionnement desdits moyens modérateurs (C_{V}) afin de régler le rapport de ladite augmentation de ladite force de freinage appliquée à ladite roue arrière (Wr) à l'augmentation de ladite force de freinage appliquée à ladite roue avant (Wf),
caractérisé en ce que lesdits moyens de réglage (80 ; C_{V3}) comprennent des moyens de réglage réglables manuellement (80 ; C_{V3}).

2. Dispositif de freinage pour motocyclette selon la revendication 1, dans lequel lesdits moyens de réglage réglables manuellement (80 ; C_{V3}) peuvent être actionnés pour faire varier en continu le rapport entre un rapport maximal et un rapport minimal.

3. Dispositif de freinage selon la revendication 1 ou 2, dans lequel lesdits moyens d'entrée du système de levier actionné à la main (L, M_{C1}) peuvent fonctionner pour freiner ladite roue avant (Wf) alors que lesdits moyens d'entrée du système de pédale actionnée au pied (P, M_{C2} ; M_{C3}) peuvent fonctionner pour freiner simultanément ladite roue avant (Wf) et ladite roue arrière (Wr).

4. Dispositif de freinage selon l'une des revendications 1 à 3, dans lequel lesdits moyens d'entrée du système de levier actionné à la main (L, M_{C1}) peuvent fonctionner pour produire une force de freinage de la roue avant (Wf) supérieure à la force de freinage de la roue arrière (Wr).

5. Dispositif de freinage selon l'une des revendications 1 à 4, dans lequel lesdits moyens d'entrée du système de pédale actionné au pied (P, M_{C2} ; M_{C3}) peuvent fonctionner pour freiner librement ladite roue avant (Wf), mais pour freiner ladite roue arrière (Wr) avec une force de freinage modérée contre la force de freinage de ladite roue avant (Wf).

6. Dispositif de freinage selon l'une des revendications précédentes, dans lequel lesdits moyens modérateurs sont en relation fluidique entre lesdits moyens d'entrée du système de pédale actionné au pied (P, M_{C2}) et un frein de roue arrière (B_{CR}).

7. Dispositif de freinage pour motocyclette selon l'une des revendications 1 à 6, dans lequel lesdits moyens modérateurs sont des moyens d'application d'une force de freinage sur la roue arrière qui fonctionnent seulement quand ladite pédale (P) est actionnée et ne fonctionnent pas quand ledit levier (L) est actionne.

8. Dispositif de freinage pour motocyclette selon l'une des revendications 1 à 7, muni d'un maître-cylindre (M_{C2}) relié directement à un cylindre de frein (B_{Cf}) de ladite roue avant (Wf) et relié par l'intermédiaire d'une vanne de régulation de pression (C_{V3}).
